# EUROPÄISCHE PATENTSCHRIFT

(11) **EP 2 651 585 B1**
(45) Veröffentlichungstag und Bekanntmachung des Hinweises auf die Patenterteilung: **27.09.2017**
(21) Anmeldenummer: 11794761.4
(22) Anmeldetag: 14.12.2011
(51) Int. Cl.: B23G 5/04, B23G 5/06, B23G 5/20, B23D 13/00, B23G 7/02, B23G 3/00, B23G 1/16

(54) **GEWINDEERZEUGUNGSWERKZEUG ZUM HERSTELLEN EINES GEWINDES IN EINEM WERKSTÜCK**
THREAD GENERATING TOOL FOR PRODUCING A THREAD IN A WORKPIECE
OUTIL DE FORMAGE DE FILET POUR PRODUIRE UN FILET SUR UNE PIÈCE

(30) Priorität: 14.12.2010 DE 102010061203; 04.04.2011 DE 102011001772
(43) Veröffentlichungstag der Anmeldung: 23.10.2013
(73) Patentinhaber: EMUGE-Werk Richard Glimpel GmbH & Co.KG Fabrik für Präzisionswerkzeuge, 91207 Lauf a.d. Pegnitz (DE); Audi AG, 85045 Ingolstadt (DE)
(72) Erfinder: GLIMPEL, Helmut, 91207 Lauf a. d. Pegnitz (DE); HECHTLE, Dietmar, 91257 Pegnitz (DE); KOPTON, Peter, 85092 Kösching (DE)
(74) Vertreter: Schröer, Gernot H.
(86) Internationale Anmeldenummer: PCT/EP2011/072729
(87) Internationale Veröffentlichungsnummer: WO 2012/080315

(56) Entgegenhaltungen:
- DE-A1-102005 022 503
- FR-A1- 2 780 906
- GB-A- 543 727
- JP-A- 49 104 058
- JP-A- 50 140 990
- US-A- 5 961 267
- US-A1- 2005 053 437
- US-A1- 2005 286 984
- US-A1- 2007 286 700

## Beschreibung

Die Erfindung betrifft ein Gewindeerzeugungswerkzeug zum Herstellen eines Gewindes in einem Werkstück.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*),* im Folgenden nur als "EMUGE-Handbuch" bezeichnet.

Unter die spanabhebenden oder spanenden Gewindeerzeugung fallen die Gewindebohrer (vgl. *EMUGE-Handbuch, Kapitel 8, Seiten 181 bis 298*) und die Gewindefräser (vgl. *EMUGE-Handbuch, Kapitel 10, Seiten 325 bis 372*) sowie, nur für Außengewinde, die Schneideisen (vgl. *EMUGE-Handbuch, Kapitel 11*, *Seiten 373 bis 404*)*.*

Ein Gewindebohrer ist ein Gewindeschneidwerkzeug, dessen Schneiden oder Gewindeschneidzähne entlang eines Außengewindes unter der Gewindesteigung des zu erzeugenden Gewindes angeordnet sind. Beim Erzeugen des Gewindes wird der Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneiden permanent mit dem Werkstück an der Kernlochwandung in Eingriff sind (kontinuierlicher Schnitt), so dass ein durchgehender Gewindegang an der Kernlochwandung entsteht.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404*)*

Gewindefurcher sind Gewindewerkzeuge mit einem annähernd spiral- oder schraubenförmig umlaufenden Gewindeprofil, entlang dem mehrere Drückstollen (auch als Formzähne, Furchzähne oder Formkeile bezeichnet) angeordnet sind, die durch zueinander versetzte weiter nach außen ragende und im Allgemeinen abgerundete Polygon-Eckbereiche eines annähernd polygonalen Querschnittes des Gewindefurchers gebildet sind. Beim Erzeugen des Gewindes wird der Gewindefurcher ähnlich wie der Gewindebohrer mit zur Werkzeugachse axialem Vorschub und unter Drehung um seine Werkzeugachse in ein zylindrisches Kernloch in einem Werkstück bewegt, wobei die Werkzeugachse des Gewindebohrers koaxial zur Mittelachse des Kernloches ausgerichtet wird. Die Drehgeschwindigkeit und die axiale Vorschubgeschwindigkeit werden entsprechend der Gewindesteigung aufeinander abgestimmt. Die Drückstollen des Gewindefurchers sind permanent mit dem Werkstück an der Kernlochwandung in Eingriff und drücken den Gewindegang durch plastische Verformung in die Kernlochwandung, so dass ein durchgehender Gewindegang an der Kernlochwandung entsteht.

Ferner sind ausschließlich spanabhebend arbeitende Kombinationswerkzeuge aus Bohrer und Gewindefräser bekannt, nämlich der sogenannte Bohrgewindefräser (BGF) (vgl. *EMUGE-Handbuch, Kapitel 10, Seite 3S4*) und der sogenannte Zirkularbohrgewindefräser (ZBGF) ((vgl. *EMUGE-Handbuch, Kapitel 10, Seite 355*), mit denen zunächst das Kernloch für das Gewinde und dann das Gewinde in dem Kernloch erzeugt werden können.

Der Werkzeugschaft der genannten Gewindeerzeugungswerkzeuge ist in der Regel wenigstens annähernd zylindrisch um seine Längsachse ausgeführt und/oder mit seinem vom Werkstück abgewandten Ende im Spannfutter einer Werkzeugmaschine aufgenommen und gehalten. Der Drehsinn von Gewindebohrer und Gewindefurcher beim Erzeugen des Gewindes entspricht dem Windungssinn des zu erzeugende Gewindes. Die in die erzeugten Innengewinde eingeschraubten bekannten Schrauben oder Schraubgewinde umfassen zu den Innengewinden komplementäre durchgehende helikale Außengewinde.

Aus US 2005/0286984 A1 ist ein Gewindefräser bekannt, bei dem ein neben dem Gewindeschneidbereich ein zweiter Schneidbereich in der helikalen Bewegung beim Gewindefräsen mitarbeitet.

In DE 10 2005 022 503 A1 ist ein ebenfalls in einer helikalen Bewegung arbeitendes Werkzeug bekannt, bei dem neben einem spanlos formenden Gewindeformbereich ein spanabhebender Bereich vorgelagert ist, der aber auch in der helikalen Bewegung arbeitet.

US 2005/0053437 A1 offenbart ein spanbrechendes Bohrwerkzeug.

JP 49 104058 A und JP 50 140990 A sowie DE 1 176 450 B und US 3,359,581 sowie EP 2 218 536 A1 offenbaren Gewindeerzeugungswerkzeuge und entsprechende Verfahren, bei denen in einem ersten Verfahrensschritt axiale Nuten in an der Bohruhgswand erzeugt werden, die um 180°, 120° oder auch 90° zueinander versetzt sein können und in einem zweiten Verfahrensschritt nun ein Gewindewerkzeug in einer axialen Bewegung in die axialen geraden Nuten eingeführt wird, wobei in jede Nut ein zugehöriger Gewindeerzeugungsbereich eingeführt wird und dann das Gewindeerzeugungswerkzeug so gedreht wird, dass der Gewindeerzeugungsbereich in der nächsten Nut landet und dann der Gewindeerzeugungsbereich wieder in der axialen Bewegung aus den Nuten herausgezogen werden kann. Hierdurch wird ein Gewinde erzeugt, das durch die Nuten unterbrochene Teilbereiche

aufweist. Jedoch wird die Prozesszeit für eine solche Gewindeerzeugung wegen der axialen Zustellbewegung des Gewindeerzeugungswerkzeuges reduziert, da nicht das Gewindeerzeugungswerkzeug durch das gesamte Gewinde gedreht werden muss, sondern nur von einer Nut zur nächsten, also um den entsprechenden Winkel von 180°, 124° oder auch 90°.

Es ist nun Aufgabe der Erfindung, ein neues Werkzeug zur Erzeugung eines Gewindes, insbesondere zur Erzeugung eines Innengewindes, anzugeben. Diese Aufgabe wird durch ein Werkzeug mit den Merkmalen des Anspruchs 1 gelöst. Vorteilhafte Ausgestaltungen und Weiterbildungen des Werkzeugs gemäß der Erfindung ergeben sich aus den vom Patentanspruch 1 abhängigen Patentansprüchen.

Das Werkzeug zum Herstellen eines Gewindes in einem Werkstück nach Patentanspruch 1 ist um eine Werkzeugachse drehbar und weist wenigstens einen Nuterzeugungsbereich zum Erzeugen einer Nut in dem Werkstück und wenigstens einen Gewindeerzeugungsbereich zum Erzeugen des Gewindes in dem Werkstück auf. Jeder Gewindeerzeugungsbereich ist nun in einer axialen Projektion parallel zur Werkzeugachse hinter dem wenigstens einen Nuterzeugungsbereich angeordnet und weist im Querschnitt in der axialen Projektion eine kleinere Ausdehnung auf als dieser Nuterzeugungsbereich oder bleibt vollständig innerhalb der Projektion (oder: innerhalb des Projektionsschattens) des Nuterzeugungsbereichs hinaus. Dadurch hat jeder Gewindeerzeugungsbereich in einer zur axialen Richtung senkrechten Projektionsebene einen Abstand vom Nutrand, insbesondere dem Nutgrund und/oder ist in axialer Richtung durch die vom in der Projektion davor liegenden Nuterzeugungsbereich erzeugte Nut im Werkstück frei bewegbar oder einführbar oder hindurchführbar. Gemäß der Erfindung weist, mit anderen Worten, also das Werkzeug eine Anzahl n ≥ 1 von Nuterzeugungsbereichen zum Erzeugen jeweils einer Nut in dem Werkstück und eine Anzahl m ≥ 1 von Gewindeerzeugungsbereichen zum Erzeugen des Gewindes in dem Werkstück auf, wobei m in der Regel mindestens so groß ist wie n, also m ≥ n, vorzugsweise m = n. Jeder der m Gewindeerzeugungsbereiche ist in einer axialen Projektion parallel zur Werkzeugachse hinter einem der n Nuterzeugungsbereiche angeordnet (oder, umgekehrt ausgedrückt: vor jedem Gewindeerzeugungsbereich liegt in der axialen Projektion ein Nuterzeugungsbereich) und weist im Querschnitt in der axialen Projektion eine kleinere Ausdehnung auf als dieser Nuterzeugungsbereich.

Das Werkzeug gemäß der Erfindung kann zum Herstellen eines Gewindes in einem Werkstück bestimmungsgemäß wie folgt eingesetzt werden:
Erzeugen einer Anzahl n von Nuten mit den n Nuterzeugungsbereichen des Werkzeugs in einer eine Gewindeachse umlaufenden Wandung des Werkstückes durch eine im Wesentlichen zur Gewindeachse axiale Bewegung des Werkzeugs, wobei jeder Nuterzeugungsbereich des Werkzeugs eine zugehörige Nut erzeugt;
Einführen der hinter den Nuterzeugungsbereichen liegenden Gewindeerzeugungsbereiche des Gewindeerzeugungswerkzeuges in die erzeugten zugehörigen Nuten in der Wandung des Werkstücks in Richtung entlang der zugehörigen Nut, wobei der Gewindeerzeugungsbereich in zur Gewindeachse radialer Richtung in die zugehörige Nut unter Einhaltung eines radialen Abstandes zum Nutgrund ragt;
Erzeugen des Gewindes in jedem an die Nut(en) angrenzenden Wandungsteilbereich der Wandung des Werkstücks durch Drehen des Gewindeerzeugungswerkzeuges um die Gewindeachse um einen vorgegebenen Drehwinkel und gleichzeitigen axialen Vorschub des Gewindeerzeugungswerkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich in den zugehörigen Wandungsteilbereich eingreift und einen zugehörigen Teil eines Gewindeganges erzeugt und nach der Drehung wieder in dieselbe Nut oder eine andere Nut in der Wandung ragt; Herausbewegen der Gewindeerzeugungsbereiche des Gewindeerzeugungswerkzeuges aus den zugehörigen Nuten in Richtung entlang der Nuten.

In einer bevorzugten Variante sind wenigstens ein Teil der n Nuterzeugungsbereiche als spanabhebende Nuterzeugungsbereiche mit Nuterzeugungsschneiden ausgebildet sind, wobei die Nuterzeugungsschneiden insbesondere als Räumschneiden ausgebildet sind und/oder an einer Stirnseite des Werkzeugs angeordnet sind.

Wenigstens ein Teil der spanabhebenden Nuterzeugungsbereiche und/oder Nuterzeugungsschneiden können in axialer Richtung und/oder in Umfangsrichtung jeweils wenigstens eine Stufe oder Kante aufweisen, die insbesondere als Spanaufteilstufe oder -kante vorgesehen ist.

In einer bevorzugten Variante weist der oder jeder Nuterzeugungsbereich weist eine zur Stirnseite gerichtete oder an dieser befindliche Nutschneide oder Stirnschneide auf, wobei diese Nutschneiden im Allgemeinen die radial am Weitesten nach außen ragenden Teile des Werkzeuges, zumindest in dessen vorderem Abschnitt, sind.

In einer Ausführungsform sind die Nutschneiden wenigstens annähernd kreisrund ausgebildet und/oder der Außenradius der Nutschneiden (42A) ist größer als der Radius des ersten Gewindeerzeugungsteilbereichs oder des Gewindeerzeugungsbereiches insgesamt.

An oder jede Nutschneide schließt sich in einer Ausführungsform seitlich in Umfangsrichtung eine im Drehsinn um die Werkzeugachse vordere Seitenschneide und vorzugsweise auch ein im Drehsinn um die Werkzeugachse hinterer Seitenbereich an. Die vordere Seitenschneide schneidet beim zur Erzeugung des Gewindes erfolgenden Drehen des Werkzeugs im Drehsinn seitlich in das Werkstück ein, wobei sich vorzugsweise radial nach innen eine seitliche Spanfläche anschließt. Der hintere Seitenbereich ist dagegen in der Regel stumpf, also nicht schneidend und vorzugsweise konvex ausgebildet.

Axial hinter der Nutschneide schließt sich im Allgemeinen eine Freifläche an, die vorzugsweise vom Außenradius an der Nutschneide auf einen Radius, der kleiner ist als der Radius des ersten Drückstollens oder des ersten Gewindeerzeugungsteilbereichs, abfällt, insbesondere linear oder konisch.

Radial nach innen schließt sich an die Nutschneide eine stirnseitige Spanfläche an, die linear oder auch konkav gekrümmt axial nach hinten verläuft und auf der beim Erzeugen, insbesondere, Räumen der Nut mit der Nutschneide entstehende Späne ablaufen. Die stirnseitige Spanfläche verläuft bevorzugt von einer tiefsten Stelle wieder axial nach vorne bis zu einem ebenen, senkrecht zur Werkzeugachse gerichteten Zentralbereich, der eine zentrale Öffnung eines zentralen Kanals des Werkzeugs umgibt, über den Kühl- und/oder Schmiermittel zugeführt werden kann.

In einer weiteren Ausführungsform ist wenigstens ein Teil der n Nuterzeugungsbereiche spanlos und/oder durch plastisches Verformen oder Eindrücken des Werkstückmaterials arbeitend ausgebildet. Jeder Nuterzeugungsbereich weist bevorzugt einen, im Wesentlichen in Umfangsrichtung um die Werkzeugachse verlaufenden Formgrat (oder: Formsteg, Drücksteg), der in axialer Richtung gesehen die radial höchste Erhebung des Nuterzeugungsbereichs ist und/oder radial am Weitesten nach außen ragt, und im Allgemeinen auch eine in axialer Richtung vor dem Formgrat liegende Vorderfläche auf, die als Anlauffläche dient, mit der der Nuterzeugungsbereich zuerst in die Werkstückoberfläche und mit langsam zunehmender Umformkraft eindrückt. Die Vorderfläche verbindet ein radial weiter innen als der Formgrat liegendes Vorderprofil, das insbesondere an der Stirnseite des Werkzeugs angeordnet ist, mit dem Formgrat in axialer Richtung. Axial hinter dem Formgrat weist jeder Nuterzeugungsbereich eine Rückenfläche auf, die von dem Formgrat in axialer Richtung abfällt und einen Freiraum zum Fließen von Werkstückmaterial bietet.

Der Formgrat hat bevorzugt ein radial am Weitesten nach außen ragendes Maximum und fällt radial vom Maximum in einer Flanke zu einem ersten Endpunkt, der radial weiter innen liegt als das Maximum, und in einer weiteren Flanke zu einem zweiten Endpunkt, der radial weiter innen liegt als das Maximum, ab. Vorzugsweise liegt auch ein Endpunkt radial weiter innen als der andere Endpunkt und/oder eine Flanke des Formgrates ist kürzer als die andere Flanke.

Das Vorderprofil hat im Allgemeinen eine ähnliche Form wie der Formgrat mit einem Maximum und zwei vom Maximum zu Endpunkten abfallenden Flanken, wobei nun die Vorderfläche vorzugsweise entsprechende Punkte und Linien wie entsprechende Maxima und/oder entsprechende Endpunkte und/oder entsprechende Flanken des Vorderprofils und des Formgrates miteinander verbindet. Vorzugsweise verläuft die Vorderfläche zwischen dem Vorderprofil und dem Formgrat in axialer Richtung im Wesentlichen linear oder konvex nach innen oder außen, oder einer beliebigen stetigen Funktion folgend, gekrümmt.

In einer Ausführungsform sind die n Nuterzeugungsbereiche sind um die Werkzeugachse in einem gleichen Winkelabstand von 360°/n zueinander angeordnet, also gleich verteilt angeordnet. Es ist aber auch eine ungleiche Teilung möglich.

Der Winkelanteil eines oder jedes Nuterzeugungsbereichs und der dahinter liegenden Gewindeerzeugungsbereiche um die Werkzeugachse beträgt in einer Variante der Erfindung zwischen 7,2° und 45°, insbesondere zwischen 13° und 40° und vorzugsweise zwischen 27° und 36°.

Die Gewindeerzeugungsbereiche ragen im Allgemeinen radial weiter nach außen als die übrigen Außenflächen des Gewindeerzeugungswerkzeugs.

In einer Variante gemäß der Erfindung ist wenigstens ein Gewindeerzeugungsbereich ein Gewindeformbereich und erzeugt seinen Teil des Gewindeganges formend und damit spanlos und/oder weisen wenigstens ein Teil der Gewindeerzeugungsbereiche des Gewindeerzeugungswerkzeugs auf einer dem zu erzeugenden Gewinde in der Gewindesteigung und dem Windungssinn entsprechenden Schraubenlinie um die Werkzeugachse angeordnete Gewindedrückstollen auf, die innerhalb des Gewindeerzeugungsbereiches radial am Weitesten nach außen ragen, jedoch radial weniger weit nach außen ragen als der oder die Nuterzeugungsbereich(e). Die Gewindeerzeugungsbereiche sind nun insbesondere in der Funktionsweise von einem Gewindefurcher abgeleitet.

In einer bevorzugten Ausführungsform ist wenigstens ein Gewindeerzeugungsbereich ein Gewindeschneidbereich und erzeugt seinen Teil des Gewindeganges spanabhebend. Wenigstens ein Teil der Gewindeerzeugungsbereiche des Gewindeerzeugungswerkzeugs weisen auf einer Schraubenlinie, die dem zu erzeugenden Gewinde in der Gewindesteigung und dem Windungssinn entspricht, um die Werkzeugachse angeordnete Gewindeschneidzähne auf, die innerhalb des Gewindeerzeugungsbereiches radial am Weitesten nach außen ragen, jedoch radial weniger weit nach außen ragen als der oder die Nuterzeugungsbereich(e), wobei sich an die Gewindeschneidzähne in Richtung entgegengesetzt zur Schneidrichtung oder Drehrichtung vorzugsweise äußere Freiflächen anschließen. Die Gewindeschneidzähne haben Gewindeschneiden oder ein Schneidprofil, die bzw. das sich auf das zu erzeugende Gewindeprofil des Gewindeganges in dessen Querschnitt abbilden bzw. abbildet.

In einer Ausführungsform sind die Gewindeschneidzähne im Windungssinn des zu erzeugenden Gewindes und der um die Werkzeugachse verlaufenden Schraubenlinie, auf der die Gewindeschneidzähne angeordnet sind, schneidend angeordnet und ausgebildet sind. Das bedeutet, wenn das zu erzeugende Gewinde rechtsgängig ist, schneiden die Gewindeschneidzähne auch nach rechts oder ebenfalls rechtsgängig, und wenn das zu erzeugende Gewinde linksgängig ist, schneiden die Gewindeschneidzähne auch nach links oder linksgängig.

Man bezeichnet ein Gewinde als Rechtsgewinde oder rechtsgängig, wenn es sich in der Richtung gesehen, in der es oder sie in das Werkstück oder zum Werkstück hin, also von außen nach innen, verläuft oder sich vom Betrachter entfernt, im Uhrzeigersinn windet, d.h. wenn der Windungssinn gleich dem Uhrzeigersinn ist oder einer Rechtsdrehung entspricht und als Linksgewinde oder linksgängig bei Windung gegen den Uhrzeigersinn oder in einer Linksdrehung, d.h. wenn der Windungssinn entgegengesetzt zum Uhrzeigersinn ist. Die gleiche Nomenklatur gilt für eine Schraubenlinie oder Helix allgemein.

Der Drehsinn des Werkzeugs und seiner Gewindeerzeugungsbereiche beim Erzeugen des Gewindes entspricht somit dem Windungssinn des Gewindes oder, mit anderen Worten, das Werkzeug wird so herum gedreht wie eine Schraube beim Eindrehen oder Einschrauben in das Gewinde, wenn es ein Innengewinde ist oder eine Mutter beim Aufdrehen oder Aufschrauben auf das Gewinde, wenn es ein Außengewinde ist.

In einer Ausführungsform sind die Gewindeschneidzähne im Windungssinn des zu erzeugenden Gewindes und der um die Werkzeugachse verlaufenden Schraubenlinie, auf der die Gewindeschneidzähne angeordnet sind, schneidend angeordnet und ausgebildet sind. Das bedeutet, wenn das zu erzeugende Gewinde rechtsgängig ist, schneiden die Gewindeschneidzähne auch nach rechts oder ebenfalls rechtsgängig, und wenn das zu erzeugende Gewinde linksgängig ist, schneiden die Gewindeschneidzähne auch nach links oder linksgängig. Der Drehsinn des Werkzeugs und seiner Gewindeerzeugungsbereiche beim Erzeugen des Gewindes entspricht somit dem Windungssinn des Gewindes oder, mit anderen Worten, das Werkzeug wird so herum gedreht wie eine Schraube beim Eindrehen oder Einschrauben in das Gewinde, wenn es ein Innengewinde ist, oder wie eine Mutter beim Aufdrehen oder Aufschrauben auf das Gewinde, wenn es ein Außengewinde ist. Dies entspricht dem Drehsinn eines bekannten Gewindebohrers.

In einer speziellen alternativen Ausführungsform gemäß der Erfindung sind die Gewindeschneidzähne jedoch entgegengesetzt zum Windungssinn des zu erzeugenden Gewindes und der Schraubenlinie um die Werkzeugachse, auf der die Gewindeschneidzähne angeordnet sind, schneidend angeordnet und ausgebildet.

Dies ist aufgrund der besonderen Gestaltung des Werkzeugs gemäß der Erfindung möglich, da die Gewindeschneidzähne zuvor durch die Nuten in der Werkstückwandung ohne Eingriff in die Werkstückwandung in das Werkstück oder auf das Werkstück zu bewegt werden können und dann erst beim Herausdrehen das Gewinde schneiden, im Gegensatz zu bekannten Gewindebohrern, die das Gewinde immer beim Hineindrehen schneiden.

Das bedeutet also, wenn das zu erzeugende Gewinde rechtsgängig ist, schneiden die Gewindeschneidzähne nach links oder linksgängig, und wenn das zu erzeugende Gewinde linksgängig ist, schneiden die Gewindeschneidzähne nach rechts oder rechtsgängig. Der Drehsinn des Werkzeugs und seiner Gewindeerzeugungsbereiche beim Erzeugen des Gewindes ist somit gerade entgegengesetzt zum Windungssinn des Gewindes oder, mit anderen Worten, das Werkzeug wird so herum gedreht wie eine Schraube beim Herausdrehen oder Ausschrauben aus dem Gewinde, wenn es ein Innengewinde ist, oder wie eine Mutter beim Abdrehen oder Abschrauben von einem Gewinde, wenn es ein Außengewinde ist.

Ein Vorteil des Werkzeugs gemäß der Erfindung gegenüber bekannten Gewindeschneid- oder Gewindefurchwerkzeugen besteht darin, dass das Gewindeerzeugungswerkzeug nicht einen üblicherweise bei Gewindebohrern oder Gewindefurchern vorhandenen Anlaufkegel oder Anschnittbereich mehr aufweisen muss, in dem der maximale radiale Abstand der Gewindezähne oder Drückstollen entlang einer Kegelfläche vom Ende des Gewindebohrers oder Gewindefurchers hin zunimmt. Dadurch kann auch bei einem Sackloch axial ein vollständiger Gewindegang entlang einer größeren Gewindelänge erzeugt werden, da der unvollständige Gewindegang, der über die Länge des Anschnittbereichs oder Anlaufkegels entstehen würde, wegfällt. Ferner können die Gewindeerzeugungswerkzeuge kürzer ausgebildet werden, was neben anderen Vorteilen insbesondere auch bei kleinen Arbeitshöhen positiv auswirkt.

Das Werkzeug gemäß der Erfindung kann ferner im Vergleich zum Stand der Technik aufgrund der (nur) axialen Einführbewegung sehr schnell von außen in seine Arbeitsposition an die Wandung des Werkstücks geführt werden, sodann das Gewinde mit einem wesentlich kleineren Drehwinkel oder mit wesentlich weniger Umdrehungen hergestellt werden und schließlich nach Erzeugen des Gewindes das Gewindewerkzeug aufgrund der (nur) axialen Abführbewegung sehr schnell nach außen von der Wandung des Werkstücks weg geführt werden. Beim Gewindebohren oder Gewindefurchen gemäß dem Stand der Technik sind immer mehrere Umdrehungen des Gewindebohrers oder Gewindefurchers notwendig und zwar zunächst beim Eindrehen und dann noch einmal beim Zurückdrehen des Werkzeugs. Beim Werkzeug gemäß der Erfindung genügt eine Umdrehung oder sogar nur ein Teil einer Umdrehung entsprechend der Zahl und Anordnung der Nuten, kombiniert mit axialen Zuführ- und Abführbewegungen. Die für das Erzeugen der Nuten erforderliche zusätzliche Zeit ist dabei in der Regel kleiner als die Zeitersparnis beim Gewindeerzeugen. Ferner kann das Gewinde gemäß der Erfindung bezüglich seiner axialen Position und bezüglich des Gewindeanfangs stellungsgenau eingebracht werden. Die Nuten stellen definierte Positionen für das Gewinde dar.

Der Drehwinkel für die Drehung des Gewindeerzeugungswerkzeugs kann so gewählt werden, dass er dem Winkelabstand zweier unmittelbar benachbarter Nuten entspricht und/oder dass jeder Gewindeerzeugungsbereich nach der Drehung in eine Nut ragt, die zu der Nut, in die der Gewindeerzeugungsbereich vor der Drehung ragt, unmittelbar benachbart ist. Insbesondere werden die n Nuten in einem gleichen Winkelabstand von 360°/n zueinander erzeugt und der Drehwinkel beträgt 360°/n oder 720°/n oder 1080°/n.

Die Nut(en) verläuft (verlaufen) im Wesentlichen axial und/oder parallel zur Gewindeachse.

In einer ersten Variante ist wenigstens ein Gewindeerzeugungsbereich ein Gewindeformbereich und erzeugt seinen Teil des Gewindeganges formend und damit spanlos. Insbesondere weisen wenigstens ein Teil der Gewindeerzeugungsbereiche auf einer dem zu erzeugenden Gewinde in der Gewindesteigung entsprechenden Schraubenlinie um die Werkzeugachse angeordnete Gewindedrückstollen auf, die innerhalb des Gewindeerzeugungsbereiches radial am Weitesten nach außen ragen.

In einer zweiten, auch mit der ersten Variante kombinierbaren Variante ist wenigstens ein Gewindeerzeugungsbereich ist ein Gewindeschneidbereich und erzeugt seinen Teil des Gewindeganges spanabhebend. Insbesondere weisen wenigstens eine Teil der Gewindeerzeugungsbereiche auf einer dem zu erzeugenden Gewinde in der Gewindesteigung entsprechenden Schraubenlinie um die Werkzeugachse angeordnete Gewindeschneidzähne auf, die innerhalb des Gewindeerzeugungsbereiches radial am Weitesten nach außen ragen. An die Gewindeschneidzähne schließen sich im Allgemeinen in Richtung entgegengesetzt zur Schneidrichtung oder Drehrichtung vorzugsweise äußere Freiflächen an.

Die Gewindeerzeugungsbereiche des Gewindeerzeugungswerkzeugs ragen im Allgemeinen radial weiter nach außen als die übrigen Außenflächen des Gewindeerzeugungswerkzeugs.

Im Allgemeinen bestimmt das Außenprofil nur eines Gewindeschneidzahnes oder Gewindeformkeiles bereits das endgültige Gewindeprofil des von diesem Zahn oder Keil erzeugten Gewindegangabschnitts.

In einer besonderen Ausgestaltung des Werkzeuges ist jeder Gewindeerzeugungsbereiche in wenigstens zwei axial versetzte Gewindeerzeugungsteilbereiche mit unterschiedlichen Gewindeaußenprofilen unterteilt, wobei insbesondere beliebige Gewindeaußenprofile in beliebiger Abfolge kombinierbar sind. Dadurch sind insbesondere unterschiedliche Klemmkräfte für die in ein mit diesem Gewindeerzeugungswerkzeug erzeugten Gewinde eingedrehte Schraube in den unterschiedlichen Gewindeteilbereichen, die den unterschiedlichen Gewindeerzeugungsteilbereichen entsprechen, einstellbar. Insbesondere ist eine größere Klemmwirkung für die eingedrehte Schraube in dem Gewindeteilbereich mit dem kleineren Gewindeprofil einstellbar.

In einer vorteilhaften Ausführungsform weist ein erster Gewindeerzeugungsteilbereich, vorzugsweise ein vorderer Gewindeerzeugungsteilbereich, der axial oder in Richtung zur Stirnseite hin vor einem hinteren Gewindeerzeugungsteilbereich liegt, ein Gewindeaußenprofil mit wenigstens teilweise kleineren Maßen oder Außenabmessungen, insbesondere am Profilkopf, aber ggf. auch an den Profilflanken, auf als ein zweiter Gewindeerzeugungsteilbereich, vorzugsweise der hintere Gewindeerzeugungsteilbereich.

Vorzugsweise kann nun die Schraube zunächst mit kleinerer Klemmwirkung oder leichtgängiger in den mit dem hinteren Gewindeerzeugungsteilbereich erzeugten hinteren Gewindeteilbereich eingedreht werden, um dann in dem mit dem vorderen Gewindeerzeugungsteilbereich erzeugten vorderen Gewindeteilbereich mit größerer Klemmwirkung oder schwergängiger mit festerem Sitz weitergedreht zu werden.

In einer speziellen Ausgestaltung hat jeder erste Gewindeerzeugungsteilbereich, insbesondere vordere Gewindeerzeugungsteilbereich in seinem Gewindeaußenprofil eine Abflachung im Profilkopf und/oder jeder zweite, insbesondere hintere, Gewindeerzeugungsteilbereich ein Gewindeaußenprofil, das einen radial weiter nach außen ragenden Profilkopf aufweist als das Gewindeaußenprofil des ersten Gewindeerzeugungsteilbereiches, insbesondere vorderen Gewindeerzeugungsteilbereiches.

In einer vorteilhaften Ausführungsform ist der Durchmesser eines Gewindeerzeugungsteilbereichs, insbesondere des ersten Gewindeerzeugungsteilbereiches oder des vorderen Gewindeerzeugungsteilbereiches, kleiner als der Durchmesser eines anderen Gewindeerzeugungsteilbereichs, insbesondere des zweiten Gewindeerzeugungsteilbereiches oder des hinteren Gewindeerzeugungsteilbereiches.

Die Wandung des Werkstückes, in der das Gewinde erzeugt wird, ist bevorzugt eine Kernlochwandung eines Kernloches, insbesondere eines Sackloches oder eines Durchgangsloches, in dem Werkstück, so dass das Gewinde ein Innengewinde ist. Es ist aber auch die Erzeugung eines Außengewindes an einer äußeren Wandung des Werkstücks möglich.

Die Erfindung wird im Folgenden anhand von Ausführungsbeispielen weiter erläutert. Dabei wird auch auf die Zeichnung Bezug genommen, in deren
- FIG 1: ein Kernloch in einem Werkstück in einer Schnittdarstellung,
- FIG 2: das Kernloch gemäß FIG 1 mit zwei in einem ersten Verfahrensschritt erzeugten Nuten in einer Schnittdarstellung,
- FIG 3: das Kernloch gemäß FIG 2 mit in einem zweiten Verfahrensschritt eingebrachtem Gewindewerkzeug mit zwei in den Nuten befindlichen Gewindeerzeugungsbereichen in einer Schnittdarstellung,
- FIG 4: das Kernloch gemäß FIG 3 mit eingebrachtem Gewindewerkzeug, das in einem dritten Verfahrensschritt um einen Drehwinkel gedreht und mit axialem Vorschub bewegt wird, wobei die Gewindeerzeugungsbereiche einen Teil eines Gewindeganges erzeugt haben, in einer teilweisen Schnittdarstellung,
- FIG 5: das Kernloch gemäß FIG 3 und 4 mit eingebrachtem Gewindewerkzeug, das in dem dritten Verfahrensschritt um den vollen Drehwinkel gedreht und mit axialem Vorschub bewegt wurde, wobei die Gewindeerzeugungsbereiche den vollständigen Gewindegang erzeugt haben, in einer teilweisen Schnittdarstellung,
- FIG 6: ein Werkstück mit einem Kernloch mit zwei Nuten und fertig erzeugtem Gewinde zwischen den Nuten in einer perspektivischen Darstellung,
- FIG 7: das Kernloch gemäß FIG 6 in einer Draufsicht und
- FIG 8: das Kernloch gemäß FIG 7 in einer Schnittdarstellung gemäß der Linie VIII-VIII in FIG 7
- FIG 9: ein spanlos arbeitendes Gewindeerzeugungswerkzeug mit zwei Gewindeerzeugungsbereichen,
- FIG 10: ein weiteres spanlos arbeitendes Gewindeerzeugungswerkzeug in einer Stirnansicht,
- FIG 11: ein Gewindeerzeugungswerkzeug mit zwei Gewindeerzeugungsbereichen und vorgelagerten Nuterzeugungsbereichen in einer perspektivischen Ansicht,
- FIG 12: das Gewindeerzeugungswerkzeug gemäß FIG 11 in einer Seitenansicht,
- FIG 13: das Gewindeerzeugungswerkzeug gemäß FIG 11 und 12 in einer um 90° gedrehten Seitenansicht,
- FIG 14: das Gewindeerzeugungswerkzeug gemäß FIG 11 bis 13 in einer Stirnansicht,
- FIG 15: ein vorderer Teil des Gewindeerzeugungswerkzeuges gemäß FIG 11 bis 13 in einem Längsschnitt gemäß XV-XV in FIG 14,
- FIG 16: ein vorderer Bereich des Gewindeerzeugungswerkzeug gemäß FIG 11 bis 15 in einem entlang der Gewindesteigung schräg geneigten Schnitt durch die vorderen Gewindezähne in Sicht nach vorne gemäß Linie XVI in FIG 15
- FIG 17: ein Werkstück mit einem Sackloch mit zwei Nuten und fertig erzeugtem Gewinde zwischen den Nuten, wobei die Nuten und das Gewinde mit einem Gewindeerzeugungswerkzeug gemäß FIG 11 bis 16 erzeugt wurde, in einer perspektivischen Darstellung,
- FIG 18: das Sackloch gemäß FIG 17 in einer Draufsicht,
- FIG 19: das Sackloch gemäß FIG 17 in einer Schnittdarstellung gemäß der Linie XIX-XIX in FIG 18,
- FIG 20: eine weitere Ausführungsform eines Gewindeerzeugungswerkzeuges in einer Seitenansicht,
- FIG 21: ein Werkstück mit einem Sackloch, in dem Nuten und Gewinde mit einem Gewindeerzeugungswerkzeug gemäß FIG 20 erzeugt wurde, in einer perspektivischen Darstellung,
- FIG 22: ein Gewindeerzeugungswerkzeug mit zwei Gewindeerzeugungsbereichen und vorgelagerten spanlosen Nuterzeugungsbereichen in einer perspektivischen Ansicht,
- FIG 23: das Gewindeerzeugungswerkzeug gemäß FIG 22 in einer Seitenansicht,
- FIG 24: das Gewindeerzeugungswerkzeug gemäß FIG 22 und 23 in einer Stirnansicht und
- FIG 25: ein Gewindeerzeugungswerkzeug mit zwei Gewindeerzeugungsbereichen und vorgelagerten spanlosen konkaven Nuterzeugungsbereichen in einer Seitenansicht.
jeweils schematisch dargestellt sind. Einander entsprechende Teile und Größen sind in den FIG 1 *bis 25* mit denselben Bezugszeichen versehen.

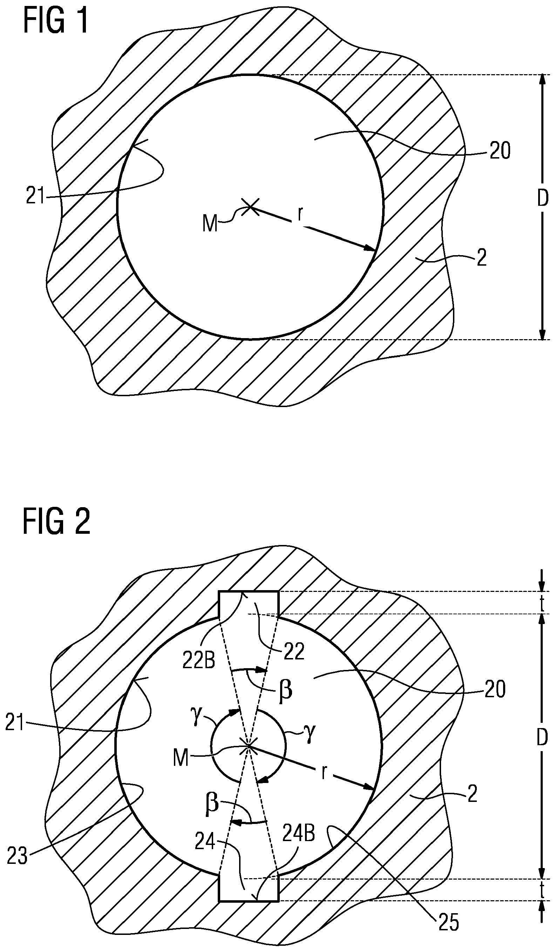

FIG 1 zeigt ein Kernloch 20 in einem Werkstück 2 in einem Schnitt, wobei das Kernloch 20 eine um eine Mittelachse M umlaufende zylindrische Kernlochwandung 21 aufweist mit dem Durchmesser D. Die zur Mittelachse M radiale Richtung ist mit einem Pfeil und dem Bezugszeichen r versehen. Das Kernloch 20 wird vorzugsweise spanabhebend erzeugt, insbesondere mit einem Bohrwerkzeug oder einem Fräswerkzeug

Gemäß FIG 2 werden nun in der Kernlochwandung 21 zwei axiale Nuten 22 und 24 erzeugt, die parallel zueinander und zur Mittelachse M und diametral zur Mittelachse M an entgegen gesetzten Seiten, also insbesondere um 180° versetzt zueinander, ausgebildet und angeordnet sind. Die vom Außendurchmesser oder von der ursprünglichen zylindrischen Kernlochwandung 21 des Kernloches 20 gemessenen Tiefen der Nuten 22 und 24 sind mit t bezeichnet und bei beiden Nuten 22 und 24 vorzugsweise gleich. Der radial außen liegende Nutgrund der Nut 22 ist mit 22B und entsprechend der Nutgrund der Nut 24 mit 24B bezeichnet. Ein zwischen den Nuten 22 und 24 in FIG 2 gegen den Uhrzeigersinn verlaufender Wandungsteilbereich der Kernlochwandung 21 ist mit 23 bezeichnet und ein auf der anderen Seite zwischen den Nuten 22 und 24 liegender Wandungsteilbereich mit 25.

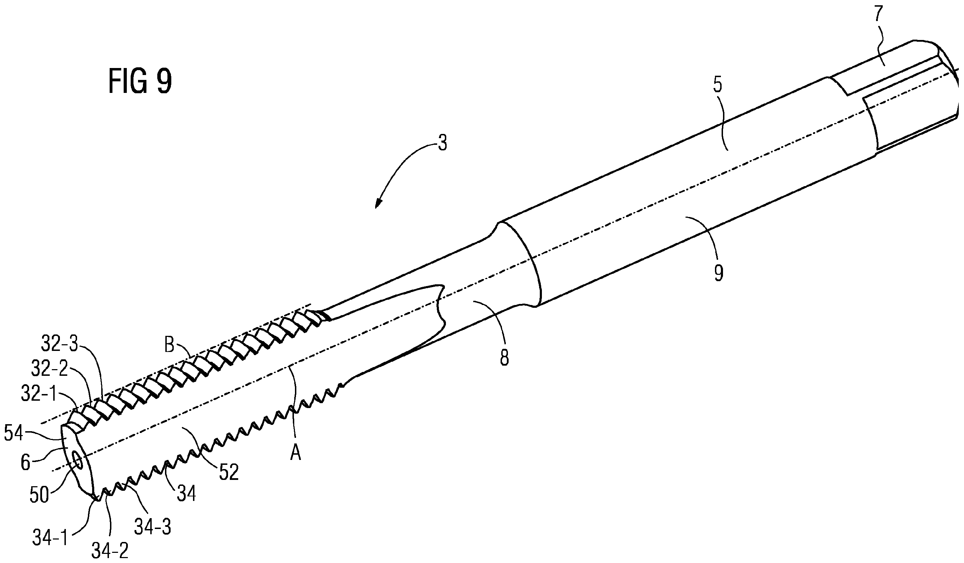

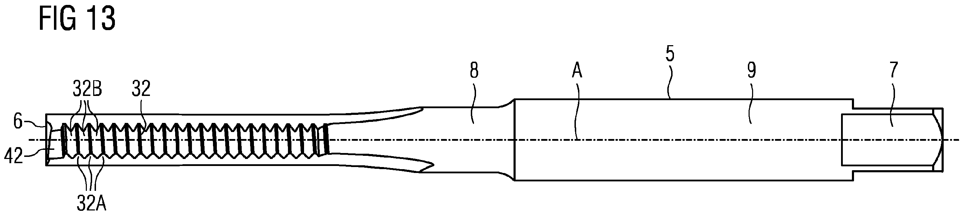

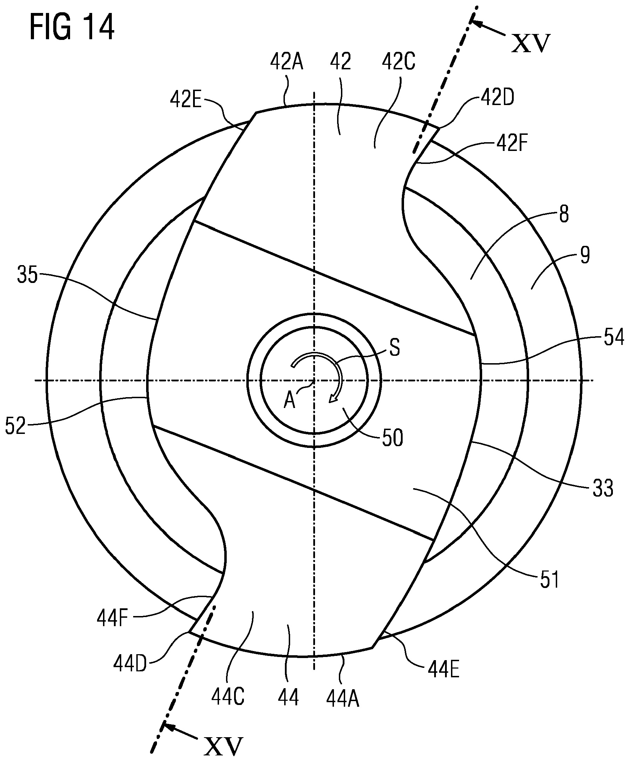

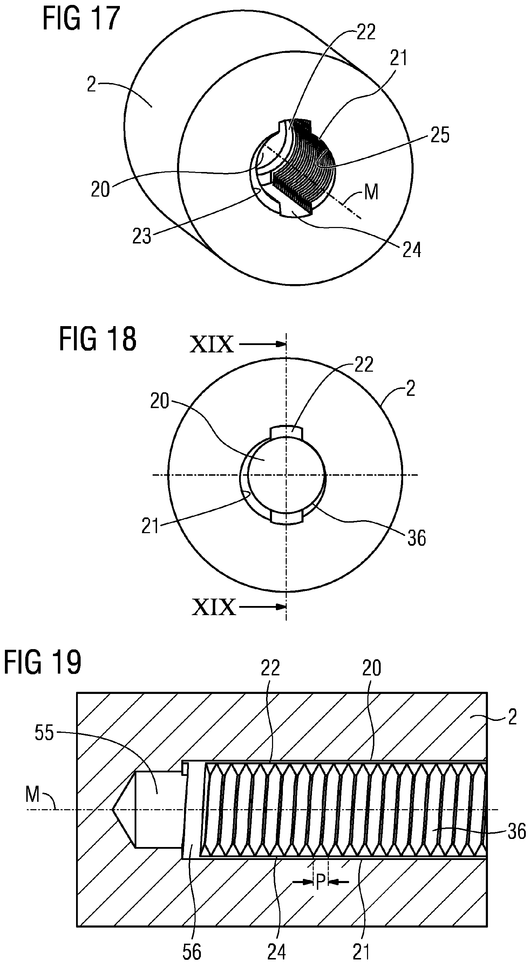

Zum Erzeugen der beiden Nuten werden entsprechend zwei Nuterzeugungsbereiche eines in FIG 1 und 2 nicht dargestellten Gewindeerzeugungswerkzeugs 3, verwendet, welches mit zur Mittelachse M des Kernloches 20 koaxialer Werkzeugachse A axial in das Kernloch 20 eingeführt wird. Dies wird noch anhand der FIG 9 bis 19 näher erläutert.

Der dem Umfangsanteil entsprechende Winkelanteil β einer Nut 22 oder 24 am Gesamtumfang des Kernloches 20 und dessen Kernlochwandung also 360° beträgt zwischen 2 % und 12,5 %, vorzugsweise zwischen 7,5 % und 10 % oder, in Winkelgraden angegeben, zwischen 7,2° und 45°, vorzugsweise zwischen 27° und 36°. Bei einem schneidenden Gewindeerzeugungswerkzeug, z. B. Gewindebohrer, kann dabei der Winkelanteil β der Nuten 22 auch kleiner sein als bei einem formenden oder furchenden Gewindewerkzeug wie z.B. einem Gewindefurcher. Der dem verbleibenden Umfangsanteil entsprechende Winkelanteil γ jedes Wandungsteilbereichs 23 und 25 ist dann (360° - 2β)/2 = 180° - β.

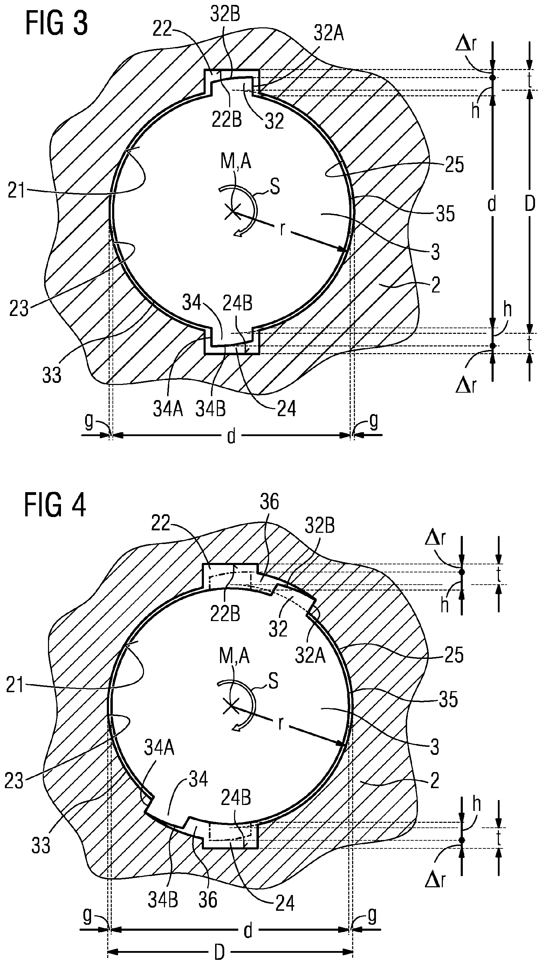

Gemäß FIG 3 ist nun das um seine Werkzeugachse A drehbares Gewindeerzeugungswerkzeug 3 mit zur Mittelachse M des Kernloches 20 koaxialen Werkzeugachse A in das Kernloch 20 eingeführt. Das Gewindeerzeugungswerkzeug 3 weist zwei diametral zur Werkzeugachse A oder um 180° versetzt zueinander angeordnete Gewindeerzeugungsbereiche 32 und 34 auf und zwischen den Gewindeerzeugungsbereichen 32 und 34 zwei insbesondere zylindrische Außenflächen 33 und 35.

Die Gewindeerzeugungsbereiche 32 und 34 ragen radial weiter nach außen als die Außenflächen 33 und 35. Der Durchmesser des Gewindeerzeugungswerkzeugs 3 von Außenfläche 33 zu Außenfläche 35 ist mit d bezeichnet. Die Gewindeerzeugungsbereiche 32 und 34 weisen auf einer dem zu erzeugenden Gewinde in der Gewindesteigung entsprechenden Spirale oder Schraubenlinie um die Werkzeugachse A angeordnete Gewindeschneidzähne 32A bzw. 34A (von denen in FIG 2 jeweils nur einer im Schnitt zu sehen ist) und sich an die Gewindeschneidzähne 32A bzw. 34A anschließende äußere Freiflächen 32B und 34B auf. In FIG 2 sind die Gewindeschneidzähne 32A und 34A in einer Drehrichtung S um die Werkzeugachse A gesehen vorne angeordnet und verlaufen die Freiflächen 32B und 34B von den Gewindeschneidzähnen 32A und 34A jeweils nach hinten. Die Gewindeschneidzähne 32A und 34A sind die radial am Weitesten nach außen ragenden Bereiche der Gewindeerzeugungsbereiche 32 und 34 des Gewindeerzeugungswerkzeugs 3. Die radiale Höhe des Gewindeschneidzahns 32A oder 34A gegenüber dem sonstigen Außenumfang des Gewindeerzeugungswerkzeugs 3, also insbesondere gegenüber dessen Außenflächen 33 und 35, ist mit h bezeichnet und bevorzugt bei beiden Gewindeerzeugungsbereichen 32 und 34 gleich.

Der radiale Abstand der Gewindeschneidzähne 32A und 34A zum jeweiligen Nutgrund 22B bzw. 24B der jeweiligen Nut 22 oder 24 ist mit Δr bezeichnet und vorzugsweise ebenfalls gleich bei beiden Nuten 22 und 24.
Dieser radiale Abstand Δr ist typischerweise zwischen 1/20 und 1/5 der Nuttiefe t gewählt.

Der Gewindeerzeugungsbereich 32 ragt in radialer Richtung r in die Nut 22 und der Gewindeerzeugungsbereich 34 in die Nut 24. Es gilt also für die jeweiligen Abmessungen d < D und d/2 + h < D/2 + t.

Der radiale Abstand oder die Spaltbreite zwischen dem Wandungsteilbereich 23 der Kernlochwandung 21 und der zugewandten Außenfläche 33 des Gewindeerzeugungswerkzeugs 3 sowie dem Wandungsteilbereich 25 der Kernlochwandung 21 und der ihr zugewandten Außenfläche 35 des Werkzeugs 3 ist mit g bezeichnet und entspricht g = (D - d) / 2. Diese Spaltbreite g sowie auch der radiale Abstand Δr zwischen Freifläche 32B oder 34B und Nutgrund 22B bzw. 24B sind jeweils zum Zwecke der besseren Darstellung vergrößert dargestellt. Im Regelfall wird das Spiel zwischen dem Gewindeerzeugungswerkzeug 3 einerseits und der Kernlochwandung 21 des Kernlochs 20 oder den Nuten 22 und 24 andererseits kleiner bemessen sein. Bevorzugt ist 0,01 < g/D < 0,1, jedoch können auch andere Parameterverhältnisse gewählt werden.

FIG 4 zeigt nun das in der Drehrichtung S um einen Winkel α gegenüber der in FIG 3 gezeigten Stellung gedrehte Gewindeerzeugungswerkzeug 3 in dem Kernloch 20 des Werkstücks 2.

Zusätzlich zur Drehbewegung in der Drehrichtung S ist das Gewindeerzeugungswerkzeug 3 in einer axialen oder linearen Vorschubbewegung koaxial zur Werkzeugachse A und auch zur Mittelachse M nach innen in das Kernloch 20 bewegt, was im Schnitt in FIG 4 nicht zu erkennen ist.

Die Vorschubgeschwindigkeit dieser axialen Vorschubbewegung ist angepasst an die Drehgeschwindigkeit der Drehbewegung in der Drehrichtung S und die gewünschte Gewindesteigung P, derart dass in der gleichen Zeit, in der das Werkzeug 3 sich um eine volle Umdrehung oder einen Drehwinkel α = 360° dreht, der axiale Vorschub oder der axiale Weg genau der Gewindesteigung P entspricht. Die axiale Vorschubgeschwindigkeit entspricht also dem Produkt aus der Gewindesteigung P und der Drehfrequenz des Werkzeugs 3.

Durch die Drehbewegung um den Drehwinkel α des Gewindeerzeugungswerkzeugs 3 bei gleichzeitiger axialer Vorschubbewegung um den Weg P · a/ 360° wurde ein Teil des Gewindeganges 36 des Gewindes in der Kernlochwandung 21 des Kernlochs 20 erzeugt und zwar ausgehend von der Nut 22 in dem Wandungsteilbereich 25 und ausgehend von der Nut 24 in dem Wandungsteilbereich 23. Zur Verdeutlichung ist der gesamte schon erzeugte Teilbereich in einem Umlauf des erzeugten Gewindeganges 36 auch im dargestellten Schnitt in FIG 4 gezeigt.

Das Gewindeerzeugungswerkzeug 3 weist nun axial zu seiner Werkzeugachse A in den Gewindeerzeugungsbereichen 32 und 34 jeweils eine axiale Reihe von Gewindeschneidzähnen 32A und 34A auf, die axial zueinander versetzt angeordnet sind.

Entsprechend der Anzahl dieser Gewindeschneidzähne 32A und 34A in der jeweiligen Reihe wird bei einer halben Umdrehung um α = 180° des Gewindeerzeugungswerkzeugs 3 bei gleichzeitigem Vorschub um P/2 eine der Anzahl der Gewindeschneidzähne in einer axialen Reihe entsprechende Zahl von Gewindeumläufen des Gewindeganges 36 erzeugt, die jeweils durch die Nuten 22 und 24 unterbrochen sind. Die Gewindeschneidzähne 32A und 34A, die diametral unmittelbar gegenüber liegen, sind dabei jeweils um P/2 versetzt angeordnet, damit die beiden separat erzeugten halben Umläufe des Gewindegangs 36 im Wandungsbereich 23 und im Wandungsbereich 25 dann nach der Nut 22 und 24 entlang des gewünschten Gewindeverlaufs in der Schraubenlinie mit der Gewindesteigung P ineinander übergehen.

Die radiale Höhe h des Gewindeschneidzahns 32A oder 34A bestimmt dabei den Abstand des Gewindegrunds 36B des Gewindeganges 36 von der Kernlochwandung 21.

Eine Umdrehung des Werkzeugs 3 um den Abstandswinkel zwischen den Nuten 22 und 24 im Kernloch 20, im Bespiel der FIG 2 bis 4 180°, als gesamten Drehwinkel α deckt dabei die gesamten dazwischen liegenden Wandungsteilbereiche 23 und 25 ab, so dass in diesen der Gewindegang 36 vollständig erzeugt wird.

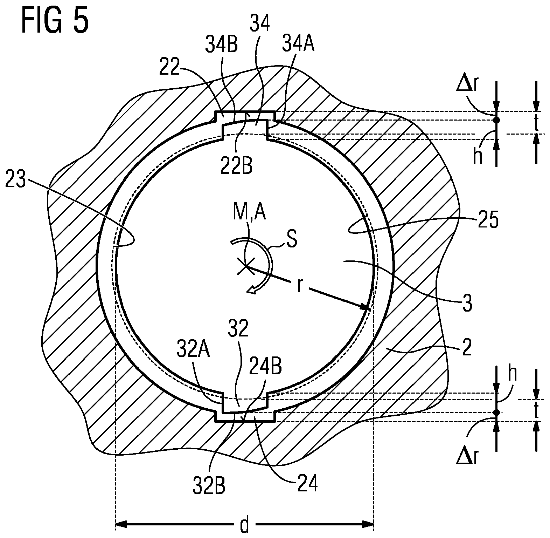

Der Zustand nach einer halben Umdrehung ist in FIG 5 gezeigt.

Der Gewindeerzeugungsbereich 32, der zuvor in die Nut 22 ragte, ragt nun in die diametral gegenüberliegende Nut 24 und der Gewindeerzeugungsbereich 34, der zuvor in die Nut 24 ragte, ragt nun in die Nut 22, beide unter dem radialen Abstand Δr zum Nutgrund 24B bzw. 22B.

Dadurch kann nun in einem weiteren Schritt das Gewindeerzeugungswerkzeug 3 axial zur Mittelachse M wieder aus dem Kernloch 20 herausgezogen werden, da die Gewindeerzeugungsbereiche 32 und 34 entlang der Nuten 24 und 22 ohne Beschädigung des erzeugten Gewindeganges 36 axial nach außen bewegt werden können.

Bei allgemein einer Anzahl n > 2 von Nuten und bei einer äquidistanten oder gleichmäßigen Teilung der Nuten in der Kernlochwandung 21, also einem Abstandswinkel von 360°/n, genügt dann eine Drehung um 360°/n, um bereits einen vollständigen Gewindegang zwischen den Nuten zu erzeugen und das Werkzeug wieder aus dem Kernloch herausbewegen zu können.

Bei einer nicht äquidistanten Anordnung oder ungleichen Teilung der Nuten ist in der Regel eine vollständige Umdrehung um 360° notwendig, um die Gewindeerzeugungsbereiche wieder in die Nuten zu bringen und das Werkzeug herausziehen zu können, es sei denn es liegt eine Achsensymmetrie oder eine n-zählige Drehsymmetrie vor, bei der schon bei einem kleineren Drehwinkel jeder Gewindeerzeugungsbereich wieder in eine zugehörige Nut ragt.

Ein Vorteil besteht darin, dass das Gewindeerzeugungswerkzeug 3, das letztendlich ein modifizierter Gewindebohrer ist, keinen Anlaufkegel oder Anschnittbereich aufweisen muss, in dem der maximale radiale Abstand der Gewindeschneidzähne entlang einer Kegelfläche vom Ende des Gewindebohrers hin zunimmt, um einen entsprechenden Zuwachs des Spans und der Eindringtiefe der Gewindeschneidzähne in die Werkstückoberfläche zu erreichen und den Schnittdruck nicht zu hoch werden zu lassen.

Beim Gewindeerzeugungswerkzeug 3 gemäß der Erfindung, das mit seinen Gewindeerzeugungsbereichen 32 und 34 in die vorab erzeugten Nuten 22 und 24 eingreift, kann der Gewindegang vielmehr gleich in voller Gewindeprofiltiefe gemäß der radialen Höhe h der Gewindeschneidzähe 32A und 34A erzeugt werden und über die axiale Gewindelänge des Gewindes gesehen geht auch bei einem Sackloch als Kernloch 20 kein Teilbereich mit einem unvollständigen Gewindegang verloren, der ansonsten durch den Anschnitt oder Anlaufkegel des Gewindebohrers bei konventionellen Gewindebohrern entsteht. Der auch bei Umdrehung nur um 180° erzeugte Gewindegang 36 ist deshalb vollständig, und zwar über seine gesamte axiale Gewindelänge. Dies ist ein Vorteil, der den gewissen Festigkeitsnachteil durch die Unterbrechungen des Gewindeganges 36 im Bereich der beiden Nuten 22 und 24 mehr als wettmachen kann.

Außerdem kann trotz des zusätzlichen Schrittes zur Erzeugung der Nuten 22 und 24 der eigentliche Gewindeerzeugungsprozess in einer kürzeren Zeit durchgeführt werden als mit konventionellen Gewindebohrern in einem kreisrunden Kernloch ohne Nuten 22 und 24.

Ferner kann durch die Nuten 22 und 24 in vorteilhafter Weise Kühl- und/oder Schmiermittel, insbesondere in Form von Öl oder Öl-Aerosol, zum Ort der Gewindeerzeugung geführt oder geleitet werden und auch zur Abfuhr der Späne verwendet werden. Ferner können auch zumindest die zuletzt erzeugten Späne von dem Gewindeschneidzahn in die jeweilige Nut 22 oder 24 eingebracht werden und dort mit vergleichsweise großem Volumen mit dem Kühl- und/oder Schmiermittel abgeführt.

Zum Transport von Kühl- und/oder Schmiermittel zu bzw. von den Gewindeerzeugungsbereichen 32 und 34 bzw. zum Abtransport von Spänen von spanenden Gewindeerzeugungsbereichen 32 und 34 kann das Gewindeerzeugungswerkzeug 3 auch an oder zu den Gewindeerzeugungsbereichen 32 und 34 verlaufende Außennuten und/oder innere Kanäle aufweisen, die nicht dargestellt sind.

Das Kernloch 20 kann in den FIG 1 bis 5 sowohl ein Durchgangsloch als auch ein Sackloch sein. Die Wandung des Werkstücks kann somit wie dargestellt die Innenwandung eines durchgehenden oder nicht durchgehenden Loches in dem Werkstück sein zur Herstellung eines Innengewindes. Das Werkzeug kann aber ebenso zur Herstellung eines Außengewindes verwendet werden, wobei dann die Nuten und anschließend das Gewinde in der Außenwandung eines Schaftes oder Bolzens oder dergleichen erzeugt werden und die Gewindeerzeugungsbereiche des Gewindeerzeugungswerkzeuges entsprechend an einer Innenfläche angeordnet oder nach innen gerichtet sind und von außen in die Außenwand des Werkstücks eingreifen. Das Gewindeerzeugungswerkzeug ist dann auch im Durchmesser größer als die Wandung des Werkstücks, während es bei einem Innengewinde kleiner ist.

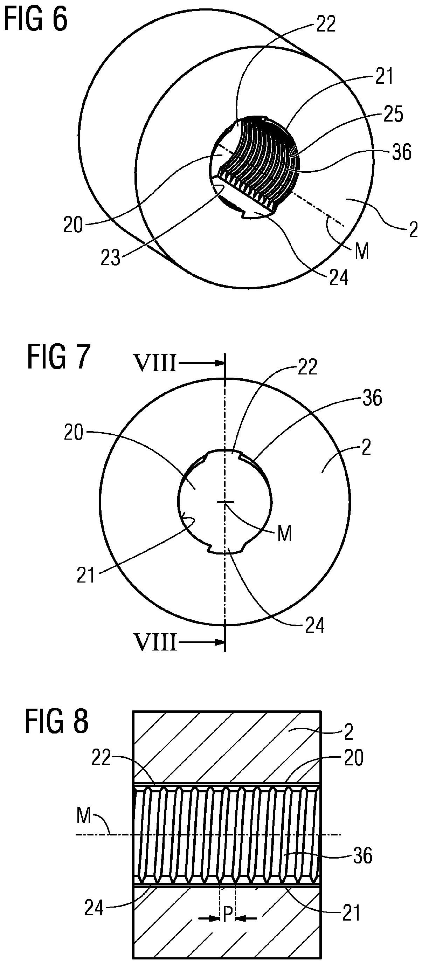

Die FIG 6 bis 8 zeigen ein mit dem Werkzeug gemäß der Erfindung erzeugtes Gewinde in einem Durchgangsloch als Kernloch 20 bei bereits herausgezogenem Gewindeerzeugungswerkzeug 3.

Der Gewindegang 36 ist vollständig in den Wandungsteilbereichen 23 und 25 der Kernlochwandung 21 des Kernlochs 20 erzeugt und nur im Bereich der Nuten 22 und 24 unterbrochen. Die Mittelachse M des Kernloches 20 ist nun die Gewindeachse des erzeugten Gewindes mit dem (unterbrochenen) Gewindegang 36. In FIG 8 ist auch die Gewindesteigung P des Gewindeganges 36 eingezeichnet.

In einer weiteren Ausführungsform kann als Gewindeerzeugungswerkzeug anstelle eines erfindungsgemäß modifizierten Gewindebohrers, wie anhand von FIG 3 bis 5 gezeigt, auch ein erfindungsgemäß modifizierter Gewindefurcher vorgesehen werden, bei dem die Gewindeerzeugungsbereiche radial nach außen ragende Drückstollen oder Furchzähne statt Gewindeschneidzähnen aufweisen. Die Drückstollen oder Furchzähne erzeugen den Gewindegang bei der Drehbewegung und gleichzeitigen axialen Vorschubbewegung des Gewindeerzeugungswerkzeugs spanlos durch plastisches Eindrücken in die Kernlochwandung 21. Die Drückstollen können insbesondere in der Mitte der Gewindeerzeugungsbereiche angeordnet sein wieder in einem radialen Abstand zum jeweiligen Nutgrund der Nuten.

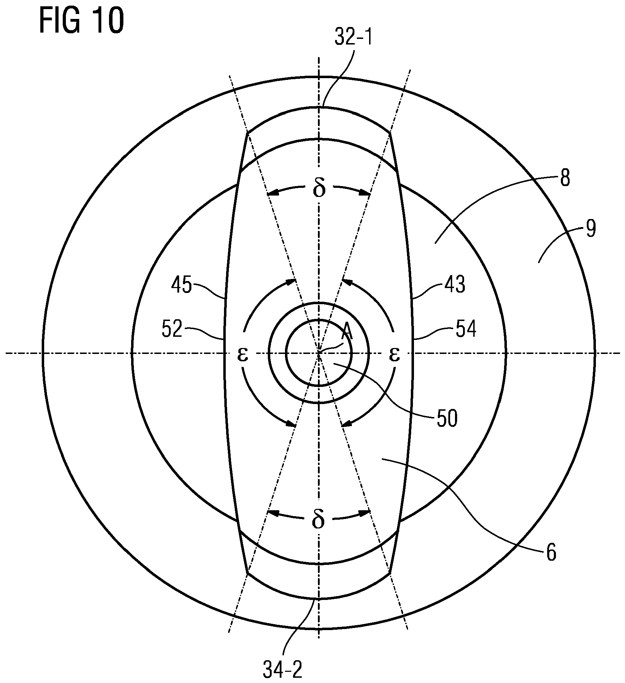

FIG 9 und 10 zeigen jeweils ein Ausführungsbeispiel eines solchen als spanlos arbeitender Gewindefurcher ausgebildeten Gewindewerkzeuges 3 gemäß der Erfindung.

Das Gewindewerkzeug 3 umfasst einen Schaft 5, der einen, beispielsweise zylindrisch ausgebildeten, hinteren Abschnitt 9 und einen vorderen Abschnitt 8, der im Durchmesser im Anschluss an den hinteren Abschnitt 9 verjüngt ist, aufweist und durch den zentral die Werkzeugachse A verläuft. Am Ende des hinteren Abschnitts 9 ist ein Vierkant 7 oder ein anders ausgebildeter Einspannbereich zum Einspannen des Schaftes 5 in ein Spannmittel, insbesondere ein Spannfutter oder eine Spannzange, einer Werkzeugmaschine zum Antreiben des Gewindewerkzeuges 3, insbesondere zum Rotieren um die Werkzeugachse A, ausgebildet.

Der vordere Abschnitt 8 weist zur vom hinteren Abschnitt 9 abgewandten oder vorne angeordneten Stirnseite 6 (oder: zum freien Ende) hin zwei Gewindeerzeugungsbereiche 32 und 34 auf, die in Form von jeweils parallel zur Werkzeugachse A verlaufenden axialen Reihen von Gewindeerzeugungsstegen ausgebildet sind und an entgegen gesetzten Seiten der Werkzeugachse A diametral zueinander angeordnet sind.

Die Gewindeerzeugungsstege verlaufen entlang der Gewindesteigung des gewünschten Gewindes und sind somit um den Gewindesteigungswinkel geneigt relativ zu einer zur Werkzeugachse A orthogonalen Ebene und weisen jeweils einen radial zur Werkzeugachse A am Weitesten nach außen ragenden Drückstollen oder Formkeil auf zum plastischen Eindrücken des Gewindeganges in das Werkstück.

Die Drückstollen der von der Stirnseite 6 aus gesehen ersten drei Gewindeerzeugungsstege des Gewindeerzeugungsbereichs 32 sind in FIG 9 mit 32-1, 32-2 und 32-3 und des Gewindeerzeugungsbereichs 34 mit 34-1, 34-2 und 34-3 bezeichnet. In FIG 10 sind nur die vordersten Drückstollen 32-1 und 34-1 zu sehen.

Die Radien oder Abstände von der Werkzeugachse A der Gewindeerzeugungsstege der beiden Gewindeerzeugungsbereiche 32 und 34 sind konstant oder gleich zueinander. Damit sind auch die Radien am Weitesten vorne an der Stirnseite 6 liegenden Formkeile oder Drückstollen 32-1, 32-2 und 32-3 sowie 34-1, 34-2 und 34-3 zueinander gleich. Der Gewindefurcher oder das Gewindeerzeugungswerkzeug 3 sowohl gemäß FIG 9 als auch gemäß FIG 10 weist somit keinen Anfurchkegel und damit keinen zunehmenden Radius bei den ersten Gewindeformkeilen auf. Vielmehr sind die Radien der Drückstollen sämtlicher Gewindeerzeugungsstege in jedem der Gewindeerzeugungsbereiche 32 und 34 gleich oder konstant über die gesamte axiale Länge. Die am Weitesten nach außen ragenden Formkeile oder Drückstollen, einschließlich der Drückstollen 32-1, 32-2 und 32-3 der Gewindeerzeugungsstege liegen also auf einer Stollenachse B, die parallel oder mit gleichem radialen Abstand zur Werkzeugachse A verläuft. Das Gleiche gilt für die Gewindeerzeugungsstege mit den Drückstollen 34-1 bis 34-4 des Gewindeerzeugungsbereiches 34.

Die beiden Gewindeerzeugungsbereiche 32 und 34 sind durch dazwischen liegende Außenflächen 33 und 35 getrennt, die einen geringeren Radius von der Werkzeugachse A oder einen geringeren Außendurchmesser haben als die Gewindeerzeugungsbereiche 32 und 34, also gegenüber diesen radial zurückversetzt sind. Die Gewindeerzeugungsbereiche 32 und 34 sind somit die im vorderen Abschnitt 8 des Gewindeerzeugungswerkzeugs 3 radial am Weitesten nach außen ragenden Teile und die Außenflächen 33 und 35 bilden Freiräume zwischen den Gewindeerzeugungsbereichen 32 und 34.

Die Gewindeerzeugungsbereiche 32 und 34 überdecken dabei, wie in FIG 10 gezeigt, jeweils einen Winkelbereich δ und die Außenflächen 33 und 35 jeweils einen Winkelbereich ε, wobei bevorzugt ε < δ < 2,5 ε ist und/oder, bezogen auf die Nuten (FIG 2), δ < β und γ < ε. Die Drückstollen 32-1 und 34-1 liegen bevorzugt zentral oder mittig in den jeweiligen Winkelbereichen δ.

Jede Außenfläche 33 und 35 des Gewindeerzeugungswerkzeugs 3 zwischen dessen Gewindeerzeugungsbereichen 32 und 34 hat eine spezielle Form. Gemäß FIG 9 bilden die Außenflächen 33 und 35 zunächst unmittelbar im Anschluss an einen der Gewindeerzeugungsbereiche 32 und 34 konkav nach innen verlaufende Abschnitte und wölben sich dann konvex nach außen in Auswölbungen 52 und 54.

Gemäß FIG 10 ist nur eine konvexe nach außen gerichtete Auswölbung 52 und 54 vorgesehen ohne konkave Zwischenabschnitte.

Durch die konvexen Auswölbungen 52 und 54 wird eine gute Steifigkeit erreicht.

Die Durchmesser oder Radien der Gewindeerzeugungsstege der beiden Gewindeerzeugungsbereiche 32 und 34 sind konstant, d. h. die Außenradien der nach außen ragenden Formkeile 32-1, 32-2 und 32-3, die am Weitesten vorne an der Stirnseite 6 liegen, sind jeweils gleich. Der Gewindefurcher oder das Gewindeerzeugungswerkzeug 3 weist somit keinen Anfurchkegel oder Anlaufbereich mit einem zunehmenden Außenradius bei den ersten Gewindeformkeilen zur sukzessiven Vertiefung oder Einarbeitung des Gewindeganges am Gewindegrund auf. Vielmehr sind die Radien sämtlicher Gewindeerzeugungsstege und deren Formkeile in jedem der Gewindeerzeugungsbereiche 32 und 34 gleich oder konstant über die gesamte axiale Länge, was anhand der ersten drei Gewindeerzeugungsstege 32-1, 32-2 und 32-3 gezeigt ist. Die am Weitesten nach außen ragenden Formkeile oder Drückstollen der Gewindeerzeugungsstege liegen also auf einer Stollenachse B, die parallel oder mit gleichem radialen Abstand zur Werkzeugachse A verläuft. Das Gleiche gilt für die Gewindeerzeugungsstege des Gewindeerzeugungsbereiches 34 (nicht in FIG 9 dargestellt). Die spezielle Form der Freiräume 52 und 54 sowie der Gewindeerzeugungsbereich 32 und 34 erlaubt die Verwendung des Gewindefurchwerkzeugs 3 gemäß FIG 9 oder FIG 10 zur Gewindeerzeugung gemäß den FIG 1 bis 8, wobei die Gewindeerzeugungsbereiche 32 und 34 in die vorab erzeugten Nuten 22 und 24 im Werkstück 2 axial eingeführt werden und dann das Gewindeerzeugungswerkzeug 3 in der beschriebenen Art und Weise gedreht wird, bis die Gewindeerzeugungsbereiche 32 und 34 wieder in den zugehörigen Nuten oder in den gegenüberliegenden Nuten 22 und 24 oder 24 und 22 zu liegen kommen, wonach das Werkzeug 3 wieder aus dem Werkstück 2 axial herausgezogen werden kann.

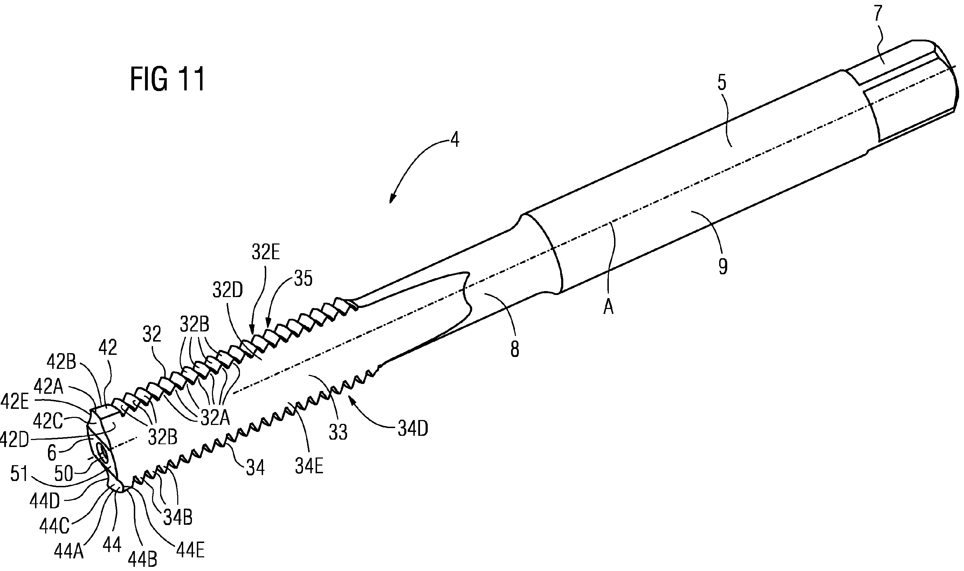

Die FIG 11 bis 16 zeigen in verschiedenen Darstellungen ein kombiniertes Werkzeug 4 gemäß der Erfindung, bei dem im vorderen Abschnitt 8 des Werkzeugs 4 zusätzlich zu zwei schneidenden Gewindeerzeugungsbereichen 32 und 34 noch an der Stirnseite 6 ein Nuterzeugungsbereich 42 vor dem Gewindeerzeugungsbereich 32 und ein Nuterzeugungsbereich 44 vor dem Gewindeerzeugungsbereich 34 axial vorgelagert sind.

Jeder Nuterzeugungsbereich 42 und 44 weist eine axial nach vorne gerichtete an der Stirnseite 6 befindliche Nutschneide 42A oder 44A auf. Die Nutschneiden 42A und 44A sind die radial am Weitesten nach außen ragenden sowie von den radial außen befindlichen Bereichen axial am Weitesten vorne befindlichen Bereiche des Werkzeuges 3 in dessen vorderem Abschnitt 8.

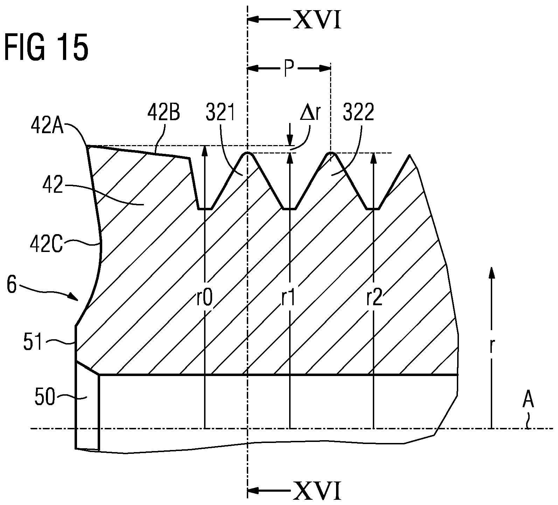

Die Nutschneiden 42A und 44A können insbesondere wenigstens annähernd kreisrund gebildet sein. Wie in FIG 15 gezeigt, ist der Radius r0 der Nutschneide 42A um einen Differenzradius Δr größer als der Radius r1 des ersten Gewindeerzeugungsteilbereichs 321 und als der, in FIG 15, zum Radius r1 gleiche Radius r2 des zweiten Gewindeerzeugungsteilbereichs 321.

An jede Nutschneide 42A und 44A schließt sich seitlich in Umfangsrichtung eine im Drehsinn S um die Werkzeugachse A vordere Seitenschneide 42D bzw. 44D und ein im Drehsinn S um die Werkzeugachse A hinterer Seitenbereich 42E oder 44E an.

Die vordere Seitenschneide 42D und 44D schneidet beim zur Erzeugung des Gewindes erfolgenden Drehen des Werkzeugs 4 im Drehsinn S seitlich in das Werkstück ein und ist entsprechend geschliffen, so dass sich radial nach innen eine Spanfläche 42F bzw. 44F anschließt zur Spanabfuhr. Der hintere Seitenbereich 42E und 444E ist dagegen stumpf und vorzugsweise konvex ausgebildet, da er nur folgt, jedoch nicht schneiden muss.

Axial hinter der Nutschneide 42A und 44A schließt sich eine Freifläche 42B bzw. 44B an, die, wie in FIG 15 gezeigt, vom Radius r0 auf einen Radius, der kleiner ist als der Radius r1 des ersten Drückstollens 32-1, abfällt, insbesondere linear oder konisch.

Radial nach innen schließt sich an die Nutschneide 42A eine stirnseitige Spanfläche 42C und an die Nutschneide 44A entsprechend eine Spanfläche 44C an, die linear oder auch konkav gekrümmt axial nach hinten verläuft und auf der beim Räumen der Nut mit der Nutschneide 42A bzw. 44A entstehende Späne ablaufen. Die Spanfläche 42C oder 44C verläuft von einer tiefsten Stelle wieder axial nach vorne bis zu einem ebenen, senkrecht zur Werkzeugachse A gerichteten Zentralbereich 51, der eine zentrale Öffnung eines zentralen Kanals 50 des Werkzeugs 4 umgibt, über den Kühl- und/oder Schmiermittel zugeführt werden kann.

Die beiden Gewindeerzeugungsbereiche 32 und 34 beim Kombinationswerkzeug 4 gemäß FIG 11 bis 16 sind vorzugsweise schneidend ausgebildet und haben mehrere im Drehsinn S um die Werkzeugachse A vorne angeordnete Gewindeschneidzähne 32A und 34A, deren Außenschneiden der Form des zu erzeugenden Gewindeprofils angepasst sind. Eine radial nach innen verlaufende Spanfläche für die von den Gewindeschneidzähnen 32A und 34A erzeugten Späne ist mit 32C bzw. 34C bezeichnet. Außen schließt sich entgegengesetzt zum Drehsinn S an die Gewindeschneidzähne 32A und 34A eine äußere Freifläche 32B bzw. 34B an, die an einem im Drehsinn S hinteren Seitenbereich 32E oder 34E endet, der leicht konvex nach außen gewölbt ist.

Die von der Stirnseite 6 gesehen ersten drei Gewindeerzeugungsteilbereiche des Gewindeerzeugungsbereichs 32 mit jeweils einem Gewindeschneidzahn sind in FIG 15 mit 32-1 bis 32-3 bezeichnet.

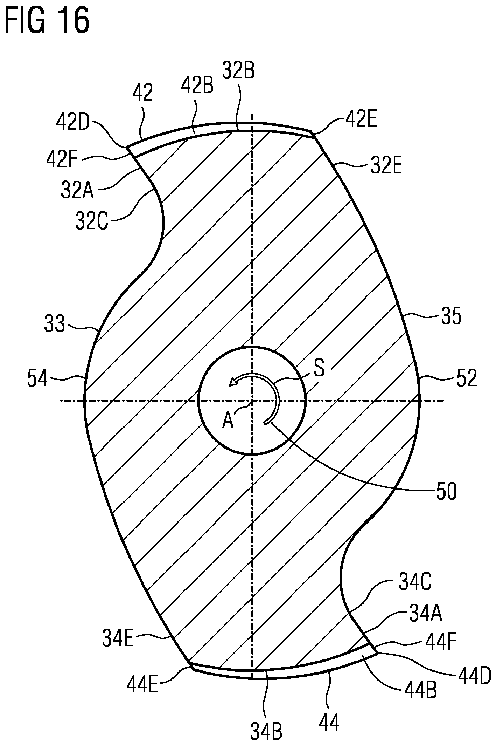

Die Gewindeschneidzähne 32A und 34A sind die radial am Weitesten nach außen ragenden Bereiche der Gewindeerzeugungsbereiche 32 und 34. Die Nuterzeugungsbereiche 42 und 44 ragen, wie gut in FIG 16 zu erkennen, radial noch weiter nach außen als die Gewindeerzeugungsbereiche 32 und 34.

Die beiden Gewindeerzeugungsbereiche 32 und 34 sind durch dazwischen liegende Außenflächen 33 und 35 des Werkzeugs 4 sowie die davor liegenden Nuterzeugungsbereiche 42 und 44 durch dazwischen liegende Außenflächen 43 und 45 des Werkzeugs 4 voneinander getrennt. Die Außenflächen 33 und 35 sowie 43 und 45 haben einen geringeren Radius von der Werkzeugachse A oder einen geringeren Außendurchmesser als die Gewindeerzeugungsbereiche 32 und 34 und die Nuterzeugungsbereiche 42 und 44 und bilden Freiräume zwischen den schneidenden Gewindeerzeugungsbereichen 32 und 34 und den Nuterzeugungsbereichen 42 und 44, die auch zur Spanabfuhr dienen.

Bevorzugt sind, vor allem aus Gründen einer einfachen Herstellung, die Form und Kontur der im Drehsinn S vorderen und hinteren seitlichen Bereiche der Gewindeerzeugungsbereiche 32 und 34 und der Nuterzeugungsbereiche 42 und 44 sowie der Außenflächen 33 und 35 sowie 43 und 45 aneinander angepasst, insbesondere in der senkrechten Projektion entlang der Werkzeugachse A aufeinanderliegend oder kongruent, d.h. z.B. die Spanflächen 32C und 42F sowie die Seitenbereiche 32E und 42E und die Außenflächen 33 und 43 sowie 35 und 45 sind aneinander angepasst, insbesondere gemeinsam geschliffen.

Jede Außenfläche 33 und 43 sowie 35 und 45 des kombinierten Werkzeugs 3 bildet zunächst unmittelbar im Anschluss an die spanabhebenden Schneiden, also die Nutschneiden 42D und 44D und die Gewindeschneidzähne 32A und 34A konkav nach innen verlaufende Abschnitte, die die Spanflächen 32C und 34C bzw. 42F und 44F bilden und wölben sich dann konvex nach außen in Auswölbungen 52 und 54, um dann auf der anderen Seite in den konvexen Seitenbereichen 32E und 34E sowie 42E und 44E nach außen auszulaufen. Durch die konvexen Auswölbungen 52 und 54 wird eine gute Steifigkeit und Stabilität des Werkzeugs hinsichtlich Drehmomenten erreicht.

Die Konturen der Nutschneiden 42D und 44D bilden sich bei der axialen Vorschubbewegung des Werkzeugs 4 und des axialen Räum- oder Schneidvorgangs auf die Nutkontur der Nut 22 bzw. 24 ab. Die Gewindeschneidzähne 32A und 34A erzeugen bei der anschließenden Drehbewegung den Gewindegang 36.

Die Nutschneiden 42A und 44A liegen in der in FIG 11 bis 16 dargestellten Ausführungsform in einer gemeinsamen Ebene, die senkrecht zur Werkzeugachse A gerichtet ist, liegen also axial auf gleicher Höhe. Dadurch sind die dahinter liegenden Schneidenrücken oder Freiflächen 42B und 44B der Nuterzeugungsbereiche 42 und 44 entsprechend der Gewindesteigung unterschiedlich lang. In einer nicht dargestellten Ausführungsform können die Nutschneiden 42A und 44A aber auch um die Gewindesteigung axial zueinander versetzt angeordnet sein, um eine gleiche axiale Länge der Nuterzeugungsbereiche 42 und 44 zu ermöglichen.

Gemäß der Erfindung arbeiten die Gewinderzeugungsbereiche das Gewinde nur durch eine kleine Drehung zwischen einer Nut (z.B. 22 oder 24) und der nächsten Nut (z.B. 24 oder 22) ein, wobei einzelne Gewindegangabschnitte, die Teile der Helix des Gewindes bilden und durch die Nuten unterbrochen oder voneinander getrennt sind, erzeugt werden. Jeder Gewindeerzeugungsbereich und jeder Gewindeschneidzahn oder Gewindeformzahn oder -keil darin erzeugt somit einen zugehörigen individuell erzeugten Gewindegangabschnitt, welcher bei Drehung nur bis zur nächsten Nut, also bei n Nuten um den Drehwinkel 360°/n nur einmalig und nur von diesem Gewindeerzeugungsbereich und dessen Gewindeschneidzahn oder Gewindeformkeil durchlaufen und erzeugt wird. Bei Drehung jedes Gewindeerzeugungsbereichs bis zur übernächsten Nut, also des Werkzeugs um 720°/n, wird der Gewindegangabschnitt zwischen zwei Nuten nur von zwei aufeinanderfolgenden Gewindeerzeugungsbereichen und deren Gewindeschneidzähnen oder Gewindeformkeilen und allgemein durchlaufen und gemeinsam hintereinander eingearbeitet. Umgekehrt betrachtet, bearbeitet jeder Gewindeerzeugungsbereich und jeder Gewindeschneidzahn oder Gewindeformzahn oder -keil darin die Werkstückoberfläche in zwei aufeinander folgenden individuellen Gewindegangabschnitten, einem zwischen der ersten Nut für i = 1 mit 1 ≤ i ≤ n und der nächsten Nut mit i = 2 und einem zwischen der nächsten Nut (i = 2) und der übernächsten Nut (i = 3 oder wieder i = 1, wenn n= 2). Bei allgemein m 360°/n Umdrehungen mit natürlicher Zahl m arbeiten m hintereinander liegende Gewindeschneidzähne oder Gewindeformkeile in demselben Gewindegangabschnitt. Jedoch wird in den seltensten Fällen m größer als 2 oder maximal 3 gewählt werden, vielmehr genügt immer bereits m = 1.

Das Außenprofil nur eines Gewindeschneidzahnes oder Gewindeformkeiles (oder höchstens m Gewindeschneidzähnen oder Gewindeformkeilen) bestimmt also bereits das endgültige Gewindeprofil des von diesem Zahn oder Keil erzeugten Gewindegangabschnitts.

Somit kann gemäß der Erfindung das Gewinde aus einzelnen Gewindegangabschnitten mit praktisch beliebig vorgegebenen Gewindeprofilen zusammengesetzt werden, wobei das Gewindeprofil jedes Gewindegangabschnittes allein und unabhängig von den anderen Gewindegangabschnitten durch das Außenprofil des bei Drehung um 360°/n einzigen dem Gewindegangabschnitt zugeordneten Gewindeschneidzahnes oder Gewindeformkeiles (oder bei Drehung um m 360°/n der höchstens m zugeordneten Gewindeschneidzähnen oder Gewindeformkeilen) abgebildet oder als dazu komplementär erzeugt wird.

Bei den bekannten Gewindebohrern oder Gewindefurchern ist diese individuelle Zuordnung von Zahn zu Gewindegangabschnitt nicht möglich. Vielmehr wird bei diesen Werkzeugen gemäß dem Stand der Technik der axial vorne der Stirnseite am nächsten liegende axial vorderste Gewindeschneidzahn bzw. Gewindeformzahn bei der Drehbewegung durch den gesamten Gewindegang über die gesamte Gewindelänge geführt und erzeugt dabei einen bereits in der Länge dem endgültigen Gewinde entsprechenden Vorgewindegang mit einem Vorgewindeprofil. Dieser Vorgewindegang und sein Vorgewindeprofil wird dann durch die nachfolgenden Gewindeschneidzähne bzw. Gewindeformzähne noch weiter, insbesondere am Gewindegrund und/oder an den Gewindeflanken des Gewindeprofils, eingearbeitet oder nachbearbeitet. Der nächstfolgende, zweitvorderste Gewindeschneidzahn bzw. Gewindeformzahn durchläuft beispielsweise den vom vordersten Gewindeschneidzahn bzw. Gewindeformzahn erzeugten Vorgewindegang ebenfalls über mindestens eine Länge, die der Gesamtlänge des Vorgewindes abzüglich des Abstandes zwischen vorderstem Gewindeschneidzahn bzw. Gewindeformzahn und zweitvordersten Gewindeschneidzahn bzw. Gewindeformzahn, entspricht. So wird also durch nacheinander dieselben Werkstückstellen bearbeitende entlang der Gewindehelix angeordnete Gewindeschneidzähne bzw. Gewindeformzähne das Gewindeprofil des Gewindeganges mit Gewindeflanken sukzessive in das Werkstück eingearbeitet. Diese Arbeitsabfolge wird besonders im Anlaufbereich dieser bekannten Gewindewerkzeuge deutlich.

Die Erfindung ermöglicht somit eine bei einem Gewindebohrer oder Gewindefurcher so bislang nicht mögliche axiale Unterteilung des Gewindes über seine Gewindelänge in verschiedene Gewindeabschnitte, in denen im Prinzip beliebige Gewindeprofile in beliebiger Abfolge oder Kombination erzeugt werden können. Dabei können sogar Gewinde erzeugt werden, bei denen erste Gewindegangabschnitte, die in der Vorwärtsrichtung des Werkzeugs oder in Richtung in das Gewinde vor zweiten Gewindegangabschnitten liegen, ein Gewindeprofil mit kleineren Maßen oder Außenabmessungen, insbesondere im Gewindegrund, aber ggf. auch an den Gewindeflanken, aufweisen als die zweiten Gewindegangabschnitte, was bei einem bekannten Gewindebohrer oder Gewindefurcher technisch unmöglich wäre.

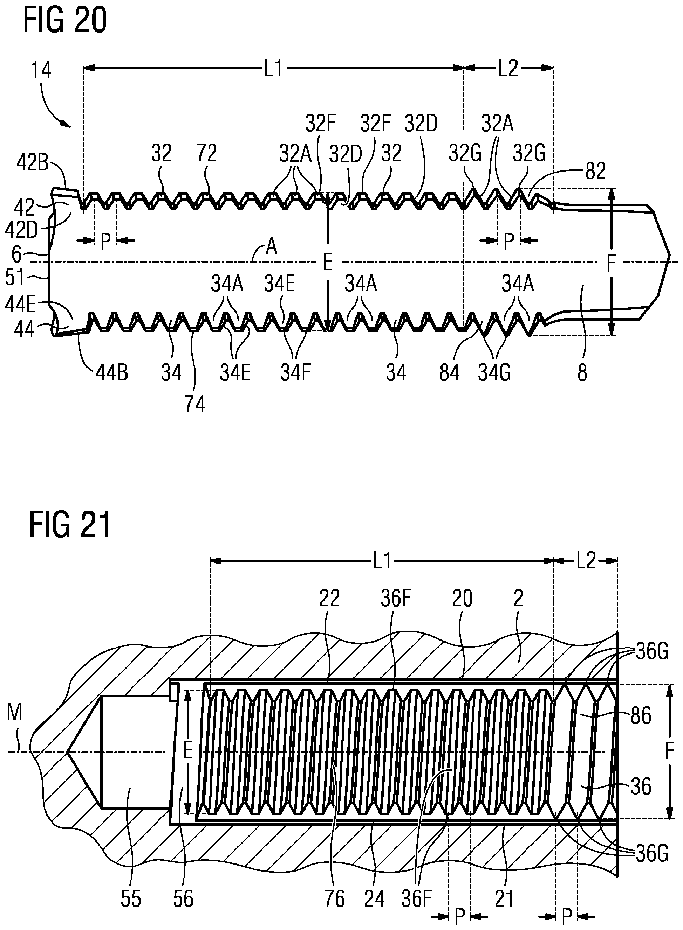

Die FIG 20 zeigt zur Illustrierung solcher Weiterbildungen gemäß der Erfindung ein weiteres Ausführungsbeispiel eines Gewindeerzeugungswerkzeuges 14 gemäß der Erfindung und FIG 21 ein mit diesem Gewindeerzeugungswerkzeug 14 nach FIG 20 erzeugtes Gewinde in einem Sackloch eines Werkstücks.

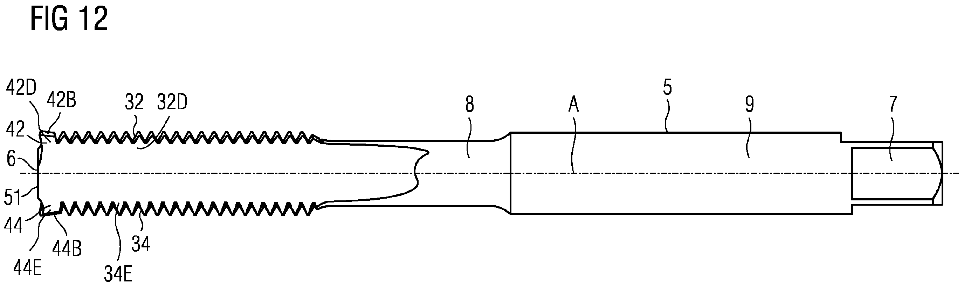

In der in FIG 20 gezeigten weiteren Ausführungsform eines Gewindeerzeugungswerkzeuges 14 sind, ausgehend von einem Gewindeerzeugungswerkzeug 4 gemäß FIG 12, der Gewindeerzeugungsbereich 32 axial hinter dem Nuterzeugungsbereich 42 und der Gewindeerzeugungsbereich 34 axial hinter dem Nuterzeugungsbereich 44 jeweils in zwei axial zur Werkzeugachse A zueinander versetzt angeordnete Gewindeerzeugungsteilbereiche 72 und 82 bzw. 74 und 84 unterteilt.

In dem zur Stirnseite 6 hin angeordneten und unmittelbar zu dem zugehörigen Nuterzeugungsbereich 42 bzw. 44 benachbarten vorderen Gewindeerzeugungsteilbereich 72 bzw. 74 sind nun im Unterschied zu FIG 12 die Gewindeschneidzähne 32A bzw. 34A in ihrem Gewindeschneidprofil oder Außenprofil mit jeweils einer Abflachung 32F bzw. 34F im Zahnkopfbereich versehen, der sich beim komplementär erzeugten Gewindegang im Werkstück auf den Gewindegrund abbildet.

In dem von der Stirnseite 6 abgewandten und hinter dem vorderen Gewindeerzeugungsteilbereich 72 bzw. 74 liegenden hinteren Gewindeerzeugungsteilbereich 82 bzw. 84 sind dagegen die Gewindeschneidzähne 32A bzw. 34A mit einem Gewindeschneidprofil oder Außenprofil versehen, das dem vollständigen Gewindeprofil des erzeugten Gewindes entspricht, und im Beispiel der FIG 20 einen eher spitzen oder in eine Außenkante oder einen Grat übergehenden Zahnkopf 32G aufweisen, der sich in einen entsprechend gestalteten Gewindegrund des Gewindeganges im Werkstück abbildet.

Die axiale Länge der vorderen Gewindeerzeugungsteilbereiche 72 und 74 ist gemeinsam mit L1 bezeichnet und die der hinteren Gewindeerzeugungsteilbereiche 82 und 84 mit L2, wobei strenggenommen die beiden um 180° versetzten Gewindeerzeugungsteilbereiche 72 und 74 oder 82 und 84 jeweils um eine halbe Gewindesteigung P/2 axial zueinander versetzt sind. Die Gewindesteigung P ist der doppelte axiale Abstand der Gewindeschneidzähne 32A und 34A zueinander.

Dieses Gewindeerzeugungswerkzeug 14 gemäß FIG 20 wird nun zur Erzeugung des in FIG 21 gezeigten Gewindes 36 wieder zunächst axial zur Mittelachse M mit dazu koaxialer oder zusammenfallender Werkszeugachse A axial in das Kernloch 20 im Werkstück 2 zugestellt. Dabei erzeugen die Nuterzeugungsbereiche 42 und 44 wieder die zugehörigen axialen Nuten 22 und 24 an der Kernlochwandung 21 und es sind nun der Gewindeerzeugungsbereich 32 in Vorwärtsrichtung des Werkzeugs zu dessen Stirnseite 6 hin hinter dem Nuterzeugungsbereich 42 in der Nut 22 und entsprechend der Gewindeerzeugungsbereich 34 hinter dem Nuterzeugungsbereich 44 in der Nut 24 angeordnet .

Nun wird das Werkzeug um seine Werkzeugachse A gedreht um 180° und bewegt sich dabei um eine halbe Gewindesteigung P/2 nach vorne (oder hinten) oder ins Kernloch 20 hinein (oder heraus), bis der Gewindeerzeugungsbereich 32 in der Nut 24 und der Gewindeerzeugungsbereich 34 in der Nut 22 angeordnet sind, also gerade vertauscht sind.

Bei dieser Arbeitsbewegung erzeugen nun in einem in Vorwärtsrichtung vorderen Gewindeteilbereich 76 des Gewindes 36 jeder Gewindeschneidzahn 32A des vorderen Gewindeerzeugungsteilbereiches 72 jeweils genau einen zugehörigen Gewindegangabschnitt zwischen der Nut 22 und der Nut 24 und jeder Gewindeschneidzahn 34A des vorderen Gewindeerzeugungsteilbereiches 74 jeweils genau einen zugehörigen Gewindegangabschnitt zwischen der Nut 24 und der Nut 22. Jeder Gewindegangabschnitt hat ein Gewindeprofil, das genau dem Außenprofil des zugehörigen Gewindeschneidzahnes 32A oder 34A entspricht, im vorliegenden Beispiel einem z.B. trapezförmigen Festsitzgewinde. Die äußeren Abflachungen 32F und 34F der Gewindeschneidzahnes 32A oder 34A bilden sich dabei auf einen entsprechend abgeflachten oder weniger tiefen Gewindegrund 36F der Gewindegangabschnitte ab. Die axiale Länge des vorderen Gewindeteilbereiches 76 des Gewindes 36 entspricht dabei im Wesentlichen der Länge L1 der Gewindeerzeugungsteilbereiche 72 und 74 des Gewindeerzeugungswerkzeuges 14 und kann z.B. wie dargestellt 16 Gewindegänge oder Gewindesteigungen P betragen, ist aber in der Länge L1 und der Zahl der Gewindesteigungen P nicht beschränkt. Der Durchmesser des vorderen Gewindeteilbereiches 76, der von Gewindegrund 36F zu gegenüberliegende Gewindegrund 36F senkrecht zur Mittelachse M gemessen wird, ist mit E bezeichnet.

In einem in Vorwärtsrichtung hinteren Gewindeteilbereich 86 des Gewindes 36 wird bei derselben Arbeitsbewegung des Gewindeerzeugungswerkzeuges 14 durch jeden Gewindeschneidzahn 32A des hinteren Gewindeerzeugungsteilbereiches 82 jeweils genau ein zugehöriger Gewindegangabschnitt zwischen der Nut 22 und der Nut 24 und durch jeden Gewindeschneidzahn 34A des hinteren Gewindeerzeugungsteilbereiches 84 jeweils genau einen zugehörigen Gewindegangabschnitt zwischen der Nut 24 und der Nut 22 erzeugt. Wieder hat jeder Gewindegangabschnitt ein Gewindeprofil, das genau dem Außenprofil des zugehörigen Gewindeschneidzahnes 32A oder 34A entspricht, im vorliegenden Beispiel einem metrischen Gewinde. Die stegartigen Zahnköpfe 32G und 34G der Gewindeschneidzahnes 32A oder 34A bilden sich dabei auf einen entsprechenden Gewindegrund 36G der Gewindegangabschnitte im hinteren Gewindeteilbereich 86 ab. Die axiale Länge des hinteren Gewindeteilbereiches 76 des Gewindes 36 entspricht dabei im Wesentlichen der Länge L2 der hinteren Gewindeerzeugungsteilbereiche 82 und 84 des Gewindeerzeugungswerkzeuges 14 und kann z.B. wie dargestellt 3 Gewindegänge oder drei Gewindesteigungen P betragen ohne Beschränkung der Allgemeinheit. Der Durchmesser des hinteren Gewindeteilbereiches 86, der von Gewindegrund 36G zu diametralem Gewindegrund 36G senkrecht zur Mittelachse M gemessen wird, ist mit F bezeichnet.

Alle derart erzeugten Gewindegangabschnitte in den Gewindeteilbereichen 76 und 86 liegen auf einer gemeinsamen Gewindehelix mit der Gewindesteigung P.

Im dargestellten Ausführungsbeispiel ist der Durchmesser E des vorderen Gewindeteilbereiches 76 kleiner als der Durchmesser F des hinteren Gewindeteilbereiches 86. Dadurch kann im vorderen Gewindeteilbereich 76 eine Klemmwirkung für eine Schraube oder einen Gewindebolzen erreicht werden, während im als Vollgewinde ausgebildeten hinteren Gewindeteilbereich 76 eine solche Klemmwirkung nicht auftritt.

Abweichend vom dargestellten Ausführungsbeispiel kann ein Gewinde mit anderer praktisch beliebiger axialer Aufteilung seines Gewindeprofils erzeugt werden. Beispielsweise könnten auch einfach die Gewindeprofile im vorderen Gewindeteilbereich 76 und im hinteren Gewindeteilbereich 86 vertauscht werden, so dass die Klemmung im hinteren Gewindeteilbereich 86 bewirkt wird.

Anstelle oder auch zusätzlich zu schneidenden Gewindeerzeugungsbereichen 32 und 34 mit Gewindeschneidzähnen 32A und 34A können in allen Ausführungsformen auch formende oder unter plastischer Verformung des Werkstücks in dieses eindrückende Gewindeerzeugungsbereiche 32 und 34 mit Gewindedrückstollen, beispielsweise wie in FIG 9 oder FIG 10 gezeigt, vorgesehen sein.

Außerdem können auch mehr als zwei Gewindeerzeugungsbereiche, beim Kombinationswerkzeug jeweils mit vorgelagertem Nuterzeugungsbereich, z.B. drei oder vier, vorgesehen sein, die gleichverteilt, also unter gleichen Winkelabständen oder auch in ungleichmäßiger Teilung angeordnet sein können.

In einer weiteren, nicht dargestellten Ausführungsform können auch wie bei einem bekannten Gewindefurcher oder Gewindebohrer die Gewinde-Drückstollen oder die Gewindeschneidzähne in einem Anlaufkegelbereich in ihrer radialen Außenabmessung bis auf die der endgültigen Gewindetiefe entsprechende maximale Außenabmessung anwachsen, um den Gewindegang in seiner Tiefe in mehreren Umdrehungen des Werkzeugs sukzessiv zu erzeugen. Diese Ausführung eignet sich vor allem für größere Gewindelängen und reduziert das bei der Gewindeerzeugung auf das Werkzeug einwirkende Moment.

Schließlich können anstelle oder zusätzlich zu schneidenden oder spanabhebenden Nuterzeugungsbereichen des Werkzeugs auch spanlos arbeitende Nuterzeugungsbereiche vorgesehen sein, die insbesondere durch plastisches Verformen oder Eindrücken der Nuten in das Material arbeiten.

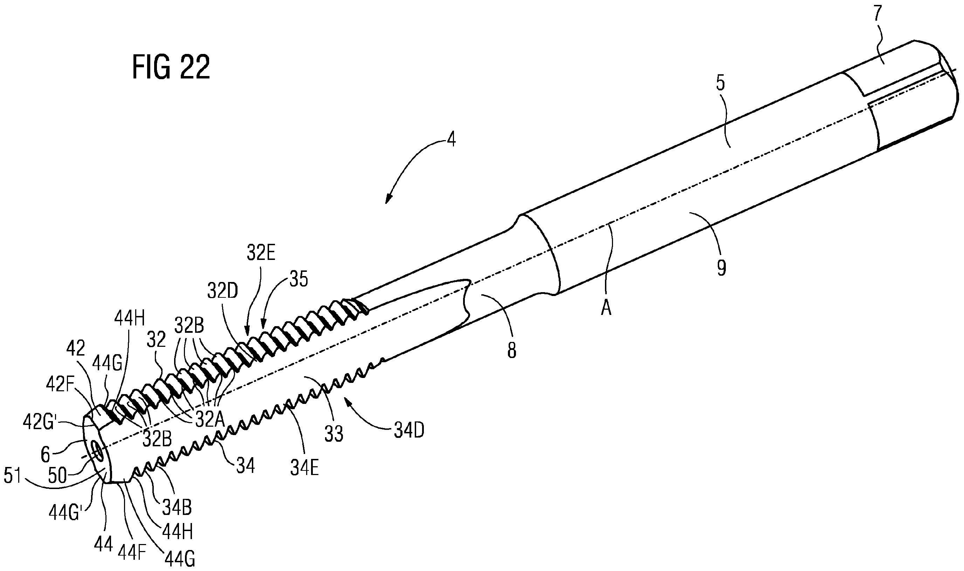

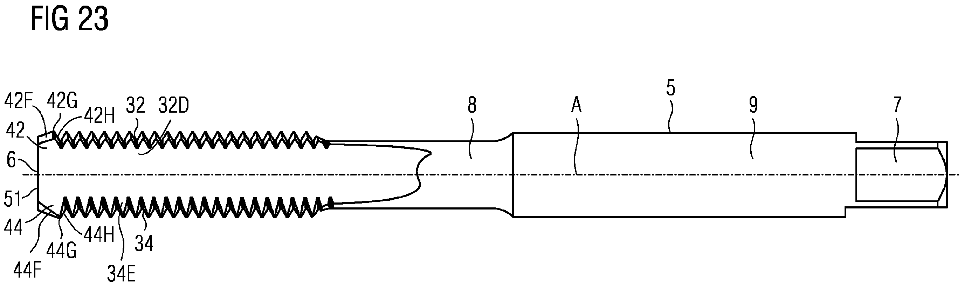

Zwei Ausführungsbeispiele für Werkzeuge 4 mit solchen spanlos arbeitenden Nuterzeugungsbereichen 42 und 44 ist in den FIG 22 bis 25 dargestellt.

Jeder Nuterzeugungsbereich 42 und 44 weist einen zentralen, im Wesentlichen in Umfangsrichtung um die Werkzeugachse A verlaufenden Formgrat (oder: Formsteg, Drücksteg) 42G bzw. 44G auf, der axial zur Werkzeugachse A gesehen die radial höchste Erhebung des Nuterzeugungsbereichs 42 und 44 ist, also den größten radialen Abstand zur Werkzeugachse A hat oder am Weitesten nach außen ragt.

Axial vor dem Formgrat 42G oder 44G weist jeder Nuterzeugungsbereich 42 und 44 eine Vorderfläche 42F bzw. 44F auf, die von einem radial weiter innen als der Formgrat 42G bzw. 44G liegenden Vorderprofil 42G' bzw. 44G' an der Stirnseite 6 des Werkzeugs 4 zu dem Formgrat 42G bzw. 44G axial ansteigt und eine Anlauffläche bildet, mit der der Nuterzeugungsbereich 42 und 44 zuerst in die Werkstückoberfläche mit langsam zunehmender Umformkraft eindrückt .

Hinter dem Formgrat 42G oder 44G schließt sich in axialer Richtung eine Rückenfläche 42H oder 44H des Nuterzeugungsbereiches 42 und 44 an, die von dem Formgrat 42G bzw. 44G in axialer Richtung abfällt.

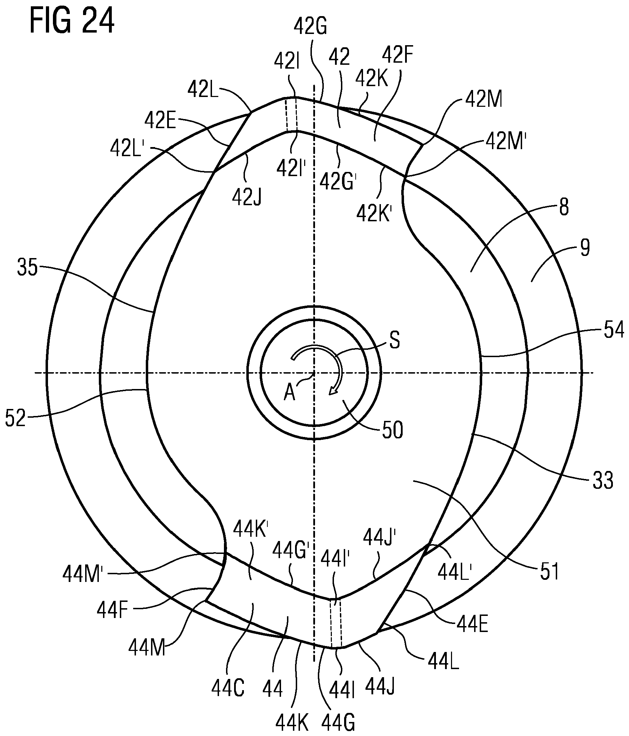

Der Formgrat 42G oder 44G hat nun selbst in Umfangsrichtung gesehen eine radial am Weitesten nach außen ragende Erhebung, nämlich ein Maximum 42I bzw. 44I, und fällt radial vom Maximum 42I bzw. 44I in beide Umfangsrichtungen ab, nämlich in einer Flanke 42J bzw. 44J zu einem hinteren Endpunkt 42L bzw. 44L, der radial weiter innen liegt als das Maximum 42I bzw. 44I, und in einer weiteren Flanke 42K bzw. 44K zu einem vorderen Endpunkt 42M bzw. 44M, der radial weiter innen liegt als das Maximum 42I bzw. 44I. Im Beispiel der FIG 24 liegt der Endpunkt 42M bzw. 44M radial weiter innen als der Endpunkt 42L bzw. 44L und die Flanke 42J bzw. 44J ist kürzer als die Flanke 42K bzw. 44K, das Maximum 42I bzw. 44I liegt also näher am hinteren Seitenbereich 42E bzw. 44E und hinteren Endpunkt 42L bzw. 44L des Nuterzeugungsbereiches 42 und 44. Diese asymmetrische Form der Nuterzeugungsbereiche 42 und 44 führt zu einer größeren Steifigkeit des Werkzeugs bei der Formung der Nuten und/oder ist den nachfolgenden Gewindeerzeugungsbereichen 32 und 34 angepasst. Kann auch symmetrisch sein.

Das Vorderprofil 42G' oder 44G' hat eine ähnliche Form wie der Formgrat 42G bzw. 44G mit einem Maximum 42I' oder 44I' und zwei vom Maximum zu Endpunkten 42L' bzw. 44L' oder 42M' bzw. 44M' abfallenden Flanken 42J' bzw. 44J' oder 42K' bzw. 44K'. Die Vorderfläche 42F oder 44F verbindet entsprechende Maxima 42I und 42I' sowie 44I und 44I' und entsprechende Endpunkte 42L und 42I' sowie 44L und 44L' sowie natürlich die dazwischen liegenden Flanken 42J und 42J' sowie 44J und 44J' und 42K und 42K' und 44K und 44K'.

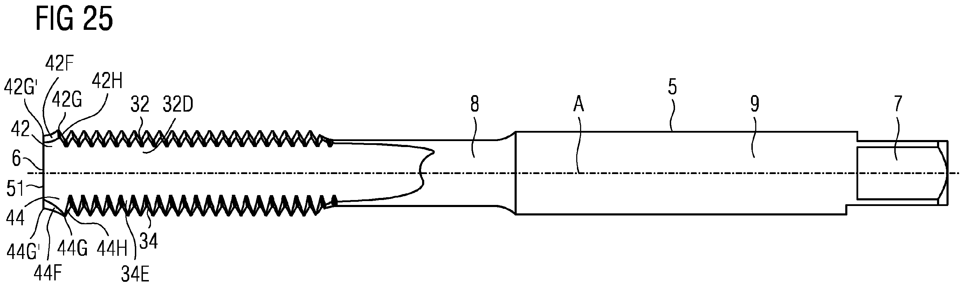

In dem Ausführungsbeispiel der FIG 22 bis 24 verläuft die Vorderfläche 42F oder 44F zwischen dem Vorderprofil und dem Formgrat in axialer Richtung im Wesentlichen linear, im Ausführungsbeispiel der FIG 25 dagegen konvex nach innen gekrümmt. Es sind diese und eine Vielzahl anderer unterschiedlicher Formen der Vorderfläche 42F oder 44F möglich je nach gewünschtem Zuwachs oder axialen Gradienten der Umformkraft.

Die in Umfangsrichtung in beide Richtungen abfallende, keilartige Form des Formgrates 42G oder 44G und der Vorderfläche 42F bzw. 44F ermöglicht ein Fließen des Werkstückmaterials auch zur Seite hin oder in Umfangsrichtung, wenn der Nuterzeugungsbereich 42 bzw. 44 axial in das Werkstück bewegt wird.

Die Gewindeerzeugungsbereiche 32 und 34 des Werkzeugs 4 sind in diesen Ausführungsbeispielen gemäß FIG 22 bis 25 spanend ausgebildet wie in FIG 11 bis 14, können aber auch anders ausgebildet sein, beispielsweise wie in FIG 20 oder auch spanlos arbeitend wie in FIG 9.

Bevorzugte Werkstoffe des Werkstücks sind Metalle, insbesondere Aluminiumlegierungen und Magnesiumlegierungen und andere Leichtmetalle, jedoch ist die Erfindung nicht auf diese Werkstoffe beschränkt. Ferner kommen als Werkstücke sowohl dickwandige oder massive Werkstücke als auch dünnwandige Bauteile oder Bleche, insbesondere aus Stahl oder anderen Werkstoffen, in Betracht.

### Bezugszeichenliste

- 2: Werkstück
- 3: Gewindeerzeugungswerkzeug
- 4: Gewindeerzeugungswerkzeug
- 5: Schaft
- 6: Stirnseite
- 7: Vielkant
- 8: vorderer Abschnitt
- 9: hinterer Abschnitt
- 14: Gewindeerzeugungswerkzeug
- 20: Kernloch
- 21: Kernlochwandung
- 22, 24: Nut
- 22B, 24B: Nutgrund
- 23, 25: Wandungsbereich

- 32, 34: Gewindeerzeugungsbereich
- 32-1, 32-2: Drückstollen
- 32-3: Drückstollen
- 32A, 34A: Gewindeschneidzahn
- 32B, 34B: Freifläche
- 32C, 34C: Spanfläche
- 32E, 34E: Seitenbereich
- 32F, 34F: Abflachung
- 32G, 34G: Zahnkopf
- 33, 35: Außenfläche
- 36: Gewindegang
- 36F: Gewindegrund
- 42, 44: Nuterzeugungsbereich
- 42A, 44A: Nutschneide
- 42B, 44B: Freifläche
- 42C, 44C: Spanfläche
- 42D, 44D: vordere Seitenschneide
- 42E, 44E: hinterer Seitenbereich
- 42F, 44F: Vorderfläche
- 42G, 44G: Formgrat
- 42G', 44G': Vorderprofil
- 42H, 44H: Rückenfläche
- 42I, 44I: Maximum
- 42I', 44I': Maximum
- 42J, 44J: Flanke
- 42J', 44J': Flanke
- 42K, 44K: Flanke
- 42K', 44K': Flanke
- 42L, 44L: Endpunkt
- 42L', 44L': Endpunkt
- 42M, 44M: Endpunkt
- 42M', 44M': Endpunkt
- 43, 45: Außenfläche
- 50: Kanal
- 51: Zentralbereich
- 52, 54: Auswölbung
- 55: gebohrter Bereich
- 56: geschnittener Bereich
- 62, 64: Auswölbung
- 72, 82: Gewindeerzeugungsteilbereich
- 74, 84: Gewindeerzeugungsteilbereich
- 76, 86: Gewindeteilbereich
- 321, 322: Gewindeerzeugungsteilbereich

- A: Werkzeugachse
- B: Stollenachse
- D: Kernlochdurchmesser
- E, F: Gewindedurchmesser
- d: Werkzeugdurchmesser
- g: Spaltbreite
- S: Drehsinn
- M: Mittelachse
- P: Gewindesteigung
- t: Nuttiefe
- r: Radius
- r0, r1, r2: Radius
- h: radiale Höhe
- Δr: radialer Abstand
- L1, L2: axiale Länge
- α: Drehwinkel
- β, γ: Winkel
- δ, ε: Winkel

## Patentansprüche

1. Gewindeerzeugungswerkzeug zum Herstellen eines Gewindes in einem Werkstück mit den Merkmalen:
a) das Werkzeug ist um eine Werkzeugachse (A) drehbar,
b) das Werkzeug weist eine Anzahl n ≥ 1 von Nuterzeugungsbereichen (42, 44) zum Erzeugen jeweils einer im Wesentlichen parallel zu einer Gewindeachse des Gewindes verlaufenden Nut (22, 24) in dem Werkstück (2) und eine Anzahl m ≥ 1 von Gewindeerzeugungsbereichen (32, 34) zum Erzeugen des Gewindes (36) in dem Werkstück auf,
c) jeder der m Gewindeerzeugungsbereiche ist in einer axialen Projektion parallel zur Werkzeugachse (A) hinter einem der n Nuterzeugungsbereiche angeordnet und weist im Querschnitt in der axialen Projektion eine kleinere Ausdehnung auf als dieser Nuterzeugungsbereich,
d) wodurch jeder Gewindeerzeugungsbereich in axialer Richtung durch die vom in der Projektion davor liegenden Nuterzeugungsbereich erzeugte Nut im Werkstück einführbar ist.

2. Werkzeug nach Anspruch 1, bei dem wenigstens ein Teil der n Nuterzeugungsbereiche als spanabhebende Nuterzeugungsbereiche mit Nuterzeugungsschneiden ausgebildet sind, wobei die Nuterzeugungsschneiden insbesondere als Räumschneiden ausgebildet sind und/oder an einer Stirnseite des Werkzeugs angeordnet sind, wobei insbesondere wenigstens ein Teil der spanabhebenden Nuterzeugungsbereiche und/oder Nuterzeugungsschneiden in axialer Richtung und/oder in Umfangsrichtung jeweils wenigstens eine Stufe oder Kante aufweisen, die insbesondere als Spanaufteilstufe oder -kante vorgesehen ist.

3. Werkzeug nach Anspruch 1 oder Anspruch 2 mit wenigstens einem oder einer beliebigen Kombination der folgenden Merkmale:
a) wenigstens ein Teil der n Nuterzeugungsbereiche sind als spanlos arbeitende und/oder durch plastisches Verformen oder Eindrücken des Werkstückmaterials arbeitende Nuterzeugungsbereiche ausgebildet,
b) jeder Nuterzeugungsbereich (42, 44) weist einen, im Wesentlichen in Umfangsrichtung um die Werkzeugachse (A) verlaufenden Formgrat (42G, 44G) auf, der in axialer Richtung gesehen die radial höchste Erhebung des Nuterzeugungsbereichs (42, 44) ist und/oder radial am Weitesten nach außen ragt,
c) in axialer Richtung vor dem Formgrat (42G, 44G) weist jeder Nuterzeugungsbereich( 42, 44) eine Vorderfläche (42F, 44F) auf,
d) die Vorderfläche (42F, 44F) von einem radial weiter innen als der Formgrat (42G, 44G) liegenden Vorderprofil (42G', 44G'), das insbesondere an der Stirnseite (6) des Werkzeugs (4) angeordnet ist, zu dem Formgrat (42G, 44G) in axialer Richtung ansteigt,
e) die Vorderfläche (42F, 44F) bildet eine Anlauffläche, mit der der Nuterzeugungsbereich (42, 44) zuerst in die Werkstückoberfläche und mit langsam zunehmender Umformkraft eindrückt,
f) in axialer Richtung hinter dem Formgrat (42G, 44G) weist jeder Nuterzeugungsbereich( 42, 44) eine Rückenfläche (42H, 44H) auf, die von dem Formgrat (42G, 44G) in axialer Richtung abfällt,
g) der Formgrat (42G, 44G) hat ein radial am Weitesten nach außen ragendes Maximum (42I, 44I) und fällt radial vom Maximum (42I, 44I) in einer Umfangsrichtung in einer Flanke (42J, 44J) zu einem ersten Endpunkt (42L, 44L), der radial weiter innen liegt als das Maximum (42I, 44I) und in der anderen Umfangsrichtung in einer weiteren Flanke (42K, 44K) zu einem zweiten Endpunkt (42M, 44M) der radial weiter innen liegt als das Maximum (42I, 44I), ab,
h) ein Endpunkt (42M, 44M) liegt radial weiter innen als der andere Endpunkt (42L, 44L) und/oder eine Flanke (42J, 44J) ist kürzer als die andere Flanke (42K, 44K),
i) das Vorderprofil (42G', 44G') hat eine ähnliche Form wie der Formgrat (42G, 44G) mit einem Maximum (42I', 44I') und zwei vom Maximum zu Endpunkten (42L', 44L', 42M', 44M') abfallenden Flanken (42J', 44J', 42K', 44K'),
j) die Vorderfläche (42F, 44F) verbindet entsprechende Maxima (42I und 42I', 44I und 44I') von Formgrat (42G, 44G) und Vorderprofil (42G', 44G') und/oder entsprechende Endpunkte (42L und 42L', 44L und 44L') und/oder entsprechende Flanken (42J und 42J', 44J und 44J', 42K und 42K', 44K und 44K'),
k) die Vorderfläche (42F, 44F) verläuft zwischen dem Vorderprofil und dem Formgrat in axialer Richtung im Wesentlichen linear oder konvex nach innen gekrümmt oder einer beliebigen stetigen radialen Funktion folgend.

4. Werkzeug nach einem der vorhergehenden Ansprüche mit wenigstens einem oder einer beliebigen Kombination der folgenden Merkmale:
a) die n Nuterzeugungsbereiche sind um die Werkzeugachse in einem gleichen Winkelabstand von 360°/n zueinander angeordnet,
b) der Winkelanteil β eines oder jedes Nuterzeugungsbereichs und der dahinter liegenden Gewindeerzeugungsbereiche um die Werkzeugachse (A) beträgt zwischen 7,2° und 45°, insbesondere zwischen 13° und 40° und vorzugsweise zwischen 27° und 36°.
c) die Gewindeerzeugungsbereiche (32 und 34) ragen radial weiter nach außen als die übrigen Außenflächen (33, 35) des Gewindeerzeugungswerkzeugs (3).

5. Werkzeug nach einem der vorhergehenden Ansprüche mit wenigstens einem oder einer beliebigen Kombination der folgenden Merkmale:
a) wenigstens ein Gewindeerzeugungsbereich ist ein Gewindeformbereich und erzeugt seinen Teil des Gewindeganges formend und damit spanlos,
b) wenigstens ein Teil der Gewindeerzeugungsbereiche (32 und 34) des Gewindeerzeugungswerkzeugs (3) weisen auf einer dem zu erzeugenden Gewinde in der Gewindesteigung und dem Windungssinn entsprechenden Schraubenlinie um die Werkzeugachse (A) angeordnete Gewindedrückstollen auf, die innerhalb des Gewindeerzeugungsbereiches radial am Weitesten nach außen ragen, jedoch radial weniger weit nach außen ragen als der oder die Nuterzeugungsbereich(e).

6. Werkzeug nach einem der vorhergehenden Ansprüche mit wenigstens einem oder einer beliebigen Kombination der folgenden Merkmale:
a) wenigstens ein Gewindeerzeugungsbereich ist ein Gewindeschneidbereich und erzeugt seinen Teil des Gewindeganges spanabhebend,
b) wenigstens eine Teil der Gewindeerzeugungsbereiche (32 und 34) des Gewindeerzeugungswerkzeugs (3) weisen auf einer dem zu erzeugenden Gewinde in der Gewindesteigung und dem Windungssinn entsprechenden Schraubenlinie um die Werkzeugachse (A) angeordnete Gewindeschneidzähne (32A bzw. 34A) auf, die innerhalb des Gewindeerzeugungsbereiches radial am Weitesten nach außen ragen, jedoch radial weniger weit nach außen ragen als der oder die Nuterzeugungsbereich(e), wobei sich an die Gewindeschneidzähne (32A, 34A) in Richtung entgegengesetzt zur Schneidrichtung oder Drehrichtung vorzugsweise äußere Freiflächen (32B, 34B) anschließen.

7. Werkzeug nach Anspruch 6,
bei dem die Gewindeschneidzähne (32A bzw. 34A) im Windungssinn des zu erzeugenden Gewindes und der Schraubenlinie um die Werkzeugachse (A), auf der die Gewindeschneidzähne (32A bzw. 34A) angeordnet sind, schneidend angeordnet und ausgebildet sind
oder
bei dem die Gewindeschneidzähne (32A bzw. 34A) entgegengesetzt zum Windungssinn des zu erzeugenden Gewindes und der Schraubenlinie um die Werkzeugachse (A), auf der die Gewindeschneidzähne (32A bzw. 34A) angeordnet sind, schneidend angeordnet und ausgebildet sind.

8. Werkzeug nach einem der vorhergehenden Ansprüche mit wenigstens einem oder einer beliebigen Kombination der folgenden Merkmale:
a) die Nuterzeugungsbereiche und/oder die Gewindeerzeugungsbereiche sind lösbar oder auswechselbar an einem Werkzeugträger befestigt,
b) jeder Nuterzeugungsbereich (42, 44) weist eine zur Stirnseite gerichtete oder an dieser befindliche Nutschneide (42A, 44A) auf,
c) die Nutschneiden (42A, 44A) sind die radial am Weitesten nach außen ragenden Bereiche des Werkzeuges (3), zumindest in dessen vorderem Abschnitt (8),
d) die Nutschneiden (42A, 44A) sind wenigstens annähernd kreisrund gebildet,
e) der Radius (r0) der Nutschneiden (42A) ist um einen Differenzradius (Δr) größer als der Radius (r1) des ersten Gewindeerzeugungsteilbereichs (321),
f) an die oder jede Nutschneide (42A, 44A) schließt sich seitlich in Umfangsrichtung eine im Drehsinn (S) um die Werkzeugachse (A) vordere Seitenschneide (42D bzw. 44D) und vorzugsweise ein im Drehsinn (S) um die Werkzeugachse (A) hinterer Seitenbereich (42E oder 44E) an,
g) die vordere Seitenschneide (42D und 44D) schneidet beim zur Erzeugung des Gewindes erfolgenden Drehen des Werkzeugs (4) im Drehsinn (S) seitlich in das Werkstück ein, wobei sich vorzugsweise radial nach innen eine seitliche Spanfläche (42F bzw. 44F) anschließt,
h) der hintere Seitenbereich (42E und 44E) ist dagegen stumpf, also nicht schneidend und vorzugsweise konvex ausgebildet,
i) axial hinter der Nutschneide (42A und 44A) schließt sich eine Freifläche (42B bzw. 44B) an, die vorzugsweise vom Radius (r0) auf einen Radius, der kleiner ist als der Radius (r1) des ersten Drückstollens (32-1) oder des ersten Gewindeerzeugungsteilbereichs, abfällt, insbesondere linear oder konisch,
j) radial nach innen schließt sich an die Nutschneide (42A, 44A) eine stirnseitige Spanfläche (42C, 44C) an, die linear oder konkav gekrümmt axial nach hinten verläuft und auf der beim Erzeugen oder Räumen der Nut mit der Nutschneide (42A bzw. 44A) entstehende Späne ablaufen,
k) die stirnseitige Spanfläche (42C, 44C) verläuft von einer tiefsten Stelle wieder axial nach vorne bis zu einem ebenen, senkrecht zur Werkzeugachse A gerichteten Zentralbereich (51), der eine zentrale Öffnung eines zentralen Kanals (50) des Werkzeugs 4 umgibt, über den Kühl- und/oder Schmiermittel zugeführt werden kann.

9. Werkzeug, insbesondere Werkzeug nach Anspruch 5, mit wenigstens einem oder einer beliebigen Kombination der folgenden Merkmale:
a) das Werkzeug ist um eine Werkzeugachse (A) drehbar und weist eine Anzahl m ≥ 1 von Gewindeerzeugungsbereichen (32, 34) zum Erzeugen eines Gewindes (36) in einem Werkstück auf,
b) das Gewindewerkzeug (3) umfasst einen Schaft (5), der einen, beispielsweise zylindrisch ausgebildeten, hinteren Abschnitt (9) und einen vorderen Abschnitt (8), der im Durchmesser im Anschluss an den hinteren Abschnitt (9) verjüngt ist, aufweist und durch den zentral die Werkzeugachse (A) verläuft,
c) am Ende des hinteren Abschnitts (9) ist ein Einspannbereich zum Einspannen des Schaftes (5) ausgebildet,
d) der vordere Abschnitt (8) weist zur vom hinteren Abschnitt (9) abgewandten oder vorne angeordneten Stirnseite (6) hin die m Gewindeerzeugungsbereiche (32, 34) auf,
e) die m Gewindeerzeugungsbereiche (32, 34) sind in Form von jeweils parallel zur Werkzeugachse (A) verlaufenden axialen Reihen von Gewindeerzeugungsstegen ausgebildet, die für den Fall m = 2 vorzugsweise an entgegen gesetzten Seiten der Werkzeugachse (A) diametral zueinander angeordnet sind,
f) die Gewindeerzeugungsstege verlaufen entlang der Gewindesteigung des gewünschten Gewindes und weisen jeweils einen radial zur Werkzeugachse (A) am Weitesten nach außen ragenden Drückstollen auf zum plastischen Eindrücken des Gewindeganges in das Werkstück,
g) die Außenradien unterschiedlicher Gewindeerzeugungsstege oder Drückstollen der beiden Gewindeerzeugungsbereiche (32, 34) sind gleich zueinander über die gesamte axiale Länge,
h) die Gewindeerzeugungsbereiche (32, 34) sind durch dazwischen liegende Außenflächen (33, 35) getrennt, die einen geringeren Außenradius haben als die Gewindeerzeugungsbereiche (32, 34), also gegenüber diesen radial zurückversetzt sind, und/oder Freiräume zwischen den Gewindeerzeugungsbereichen bilden,
i) die Gewindeerzeugungsbereiche (32, 34) überdecken jeweils einen ersten Winkelbereich (δ) und die Außenflächen (33, 35) jeweils einen zweiten Winkelbereich (ε), wobei bevorzugt der erste Winkelbereich (δ) in einem Intervall von dem einfachen bis zum 2,5-fachen des zweiten Winkelbereichs (ε) liegt und/oder wobei die Drückstollen bevorzugt mittig in den jeweiligen Winkelbereichen liegen,
j) die Außenflächen (33, 35) bilden zunächst unmittelbar im Anschluss an einen der Gewindeerzeugungsbereiche (32, 34) konkav nach innen verlaufende Abschnitte und wölben sich dann konvex nach außen in Auswölbungen (52, 54) oder weisen nur eine konvexe nach außen gerichtete Auswölbung (52, 54) auf.

10. Werkzeug nach einem der vorhergehenden Ansprüche mit wenigstens einem oder einer beliebigen Kombination der folgenden Merkmale:
a) das Außenprofil nur eines Gewindeschneidzahnes oder Gewindeformkeiles bestimmt bereits das endgültige Gewindeprofil des von diesem Zahn oder Keil erzeugten Gewindegangabschnitts,
b) die Gewindeerzeugungsbereiche sind in axial versetzte Gewindeerzeugungsteilbereiche (72 und 82 bzw. 74 und 84) mit unterschiedlichen Gewindeaußenprofilen unterteilt, wobei insbesondere beliebige Gewindeaußenprofile in beliebiger Abfolge kombinierbar sind,
c) ein erster Gewindeerzeugungsteilbereich, vorzugsweise ein vorderer Gewindeerzeugungsteilbereich (72, 74), der axial oder in Richtung zur Stirnseite hin vor einem hinteren Gewindeerzeugungsteilbereich (82, 84) liegt, weist ein Gewindeaußenprofil mit wenigstens teilweise kleineren Maßen oder Außenabmessungen, insbesondere am Profilkopf, aber ggf. auch an den Profilflanken, auf als ein zweiter Gewindeerzeugungsteilbereich, vorzugsweise der hintere Gewindeerzeugungsteilbereich (82, 84),
d) jeder erste Gewindeerzeugungsteilbereich, insbesondere vordere Gewindeerzeugungsteilbereich (72, 74), hat in seinem Gewindeaußenprofil eine Abflachung (32F, 34F) im Profilkopf,
e) jeder zweite, insbesondere hintere, Gewindeerzeugungsteilbereich (82, 84) hat ein Außenprofil, das einen radial weiter nach außen ragenden Profilkopf (32G) aufweist als der erste Gewindeerzeugungsteilbereich, insbesondere vordere Gewindeerzeugungsteilbereich (72, 74),
f) der Durchmesser (E) eines Gewindeerzeugungsteilbereichs, insbesondere des ersten Gewindeerzeugungsteilbereiches oder des vorderen Gewindeerzeugungsteilbereiches (72, 74), ist kleiner als der Durchmesser (F) eines anderen Gewindeerzeugungsteilbereichs, , insbesondere des zweiten Gewindeerzeugungsteilbereiches oder des hinteren Gewindeerzeugungsteilbereiches (82, 84).

11. Verfahren zum Herstellen eines Gewindes in einem Werkstück mit den folgenden Verfahrensschritten:
- Erzeugen einer Anzahl n von Nuten mit n Nuterzeugungsbereichen eines Werkzeugs in einer eine Gewindeachse umlaufenden Wandung des Werkstückes durch eine im Wesentlichen zur Gewindeachse axiale Bewegung des Werkzeugs, wobei jeder Nuterzeugungsbereich des Werkzeugs eine zugehörige Nut erzeugt;
- Einführen von hinter den Nuterzeugungsbereichen liegenden Gewindeerzeugungsbereichen des Werkzeuges in die erzeugten zugehörigen Nuten in der Wandung des Werkstücks in Richtung entlang der zugehörigen Nut, wobei der Gewindeerzeugungsbereich in zur Gewindeachse radialer Richtung in die zugehörige Nut unter Einhaltung eines radialen Abstandes zum Nutgrund ragt;
- Erzeugen des Gewindes in jedem an die Nut(en) angrenzenden Wandungsteilbereich der Wandung des Werkstücks durch Drehen des Werkzeuges um die Gewindeachse um einen vorgegebenen Drehwinkel und gleichzeitigen axialen Vorschub des Gewindeerzeugungswerkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich in den zugehörigen Wandungsteilbereich eingreift und einen zugehörigen Teil eines Gewindeganges erzeugt und nach der Drehung wieder in dieselbe Nut oder eine andere Nut in der Wandung ragt;
- Herausbewegen der Gewindeerzeugungsbereiche des Gewindeerzeugungswerkzeuges aus den zugehörigen Nuten in Richtung entlang der Nuten.

12. Verfahren nach Anspruch 11, bei dem beim Einführen der Gewindeerzeugungsbereiche des Werkzeuges in die erzeugten zugehörigen Nuten jeder Gewindeerzeugungsbereich in zur Gewindeachse radialer Richtung in die zugehörige Nut unter Einhaltung eines radialen Abstandes zum Nutgrund ragt.

13. Verfahren nach Anspruch 11 oder Anspruch 12, bei dem beim Erzeugen des Gewindes das Werkzeug um einen vorgegebenen Drehwinkel um die Gewindeachse gedreht wird.

14. Verfahren nach einem der Ansprüche 11 bis 13, bei dem ein Werkzeug nach einem der Ansprüche 1 bis 10 verwendet wird.

## Claims

1. Thread generating tool for producing a thread in a workpiece, having the features:
a) the tool is rotatable about a tool axis (A),
b) the tool has a number n ≥ 1 of groove generating regions (42, 44) for generating in each case one groove (22, 24), which runs substantially parallel with respect to a thread axis of the thread, in the workpiece (2) and a number m ≥ 1 of thread generating regions (32, 34) for generating the thread (36) in the workpiece,
c) each of the m thread generating regions is arranged behind one of the n groove generating regions as viewed in an axial projection parallel to the tool axis (A), and has a smaller extent than said groove generating region as viewed in cross section in the axial projection,
d) as a result of which each thread generating region can in the axial direction be introduced through the groove generated in the workpiece by the groove generating region situated in front as viewed in the projection.

2. Tool according to Claim 1, in which at least some of the n groove generating regions are formed as cutting groove generating regions with groove generating cutting edges, wherein the groove generating cutting edges are formed in particular as reaming cutting edges and/or are arranged on a face side of the tool, wherein in particular, at least some of the cutting groove generating regions and/or groove generating cutting edges have, in an axial direction and/or in a circumferential direction, in each case at least one step or edge which is provided in particular as a chip-splitting step or edge.

3. Tool according to Claim 1 or Claim 2 having at least one or any desired combination of the following features:
a) at least some of the n groove generating regions are formed as groove generating regions which operate in a non-cutting manner and/or which operate by plastic deformation or impression of the workpiece material,
b) each groove generating region (42, 44) has a shaping spine (42G, 44G) which runs substantially in a circumferential direction around the tool axis (A) and which, as viewed in an axial direction, is the radially highest elevation of the groove generating region (42, 44) and/or projects radially furthest outward,
c) in front of the shaping spine (42G, 44G) in an axial direction, each groove generating region (42, 44) has a front surface (42F, 44F),
d) the front surface (42F, 44F) rises in an axial direction from a front profile (42G', 44G'), which is situated radially further inward than the shaping spine (42G, 44G) and which is arranged in particular on the face side (6) of the tool (4), to the shaping spine (42G, 44G),
e) the front surface (42F, 44F) forms a run-on surface by means of which the groove generating region (42, 44) presses into the workpiece surface for the first time and with slowly increasing deformation force,
f) behind the shaping spine (42G, 44G) in an axial direction, each groove generating region (42, 44) has a back surface (42H, 44H) which slopes downward from the shaping spine (42G, 44G) in an axial direction,
g) the shaping spine (42G, 44G) has a maximum (421, 44I) which projects radially furthest outward, and said shaping spine slopes downward radially from the maximum (421, 44I) in one circumferential direction in one flank (42J, 44J) to a first end point (42L, 44L) which is situated radially further inward than the maximum (421, 441), and in the other circumferential direction in a further flank (42K, 44K) to a second end point (42M, 44M) which is situated radially further inward than the maximum (421, 441),
h) one end point (42M, 44M) is situated radially further inward than the other end point (42L, 44L) and/or one flank (42J, 44J) is shorter than the other flank (42K, 44K),
i) the front profile (42G', 44G') has a similar shape to the shaping spine (42G, 44G) with a maximum (421', 441') and two flanks (42J', 44J' 42K' 44K') sloping downward from the maximum to end points (42L', 44L', 42M', 44M'),
j) the front surface (42F, 44F) connects corresponding maxima (421 and 421', 441 and 441') of the shaping spine (42G, 44G) and front profile (42G', 44G') and/or corresponding end points (42L and 42L', 44L and 44L') and/or corresponding flanks (42J and 42J', 44J and 44J', 42K and 42K', 44K and 44K'),
k) the front surface (42F, 44F) runs between the front profile and the shaping spine in an axial direction in a substantially linear or convexly inwardly curved manner or following an arbitrary continuous radial function.

4. Tool according to one of the preceding claims, having at least one or any desired combination of the following features:
a) the n groove generating regions are arranged at uniform angular intervals of 360°/n relative to one another about the tool axis,
b) the angle component β of one or each groove generating region and of the thread generating regions, situated therebehind, about the tool axis (A) is between 7.2° and 45°, in particular between 13° and 40° and preferably between 27° and 36°,
c) the thread generating regions (32 and 34) project radially further outward than the other outer surfaces (33, 35) of the thread generating tool (3).

5. Tool according to one of the preceding claims, having at least one or any desired combination of the following features:
a) at least one thread generating region is a thread shaping region and generates its part of the thread flight by a shaping and thus non-cutting process,
b) at least some of the thread generating regions (32 and 34) of the thread generating tool (3) have thread pressing lobes arranged on a helical line, which corresponds in terms of thread pitch and turning direction to the thread to be generated, about the tool axis (A), which thread pressing lobes project radially furthest outward within the thread generating region but project radially outward to a lesser extent than the one or more groove generating region(s).

6. Tool according to one of the preceding claims, having at least one or any desired combination of the following features:
a) at least one thread generating region is a thread cutting region and generates its part of the thread flight by a cutting process,
b) at least some of the thread generating regions (32 and 34) of the thread generating tool (3) have thread cutting teeth (32A and 34A) arranged on a helical line, which corresponds in terms of thread pitch and turning direction to the thread to be generated, about the tool axis (A), which thread cutting teeth project radially furthest outward within the thread generating region but project radially outward to a lesser extent than the one or more groove generating region(s), wherein the thread cutting teeth (32A, 34A) are joined in a direction opposite to the cutting direction or direction of rotation by preferably outer free surfaces (32B, 34B).

7. Tool according to Claim 6,
in which the thread cutting teeth (32A and 34A) are arranged and formed so as to cut in the turning direction of the thread to be generated and of the helical line about the tool axis (A) on which the thread cutting teeth (32A and 34A) are arranged,
or
in which the thread cutting teeth (32A and 34A) are arranged and formed so as to cut oppositely to the turning direction of the thread to be generated and of the helical line about the tool axis (A) on which the thread cutting teeth (32A and 34A) are arranged.

8. Tool according to one of the preceding claims, having at least one or any desired combination of the following features:
a) the groove generating regions and/or the thread generating regions are fastened detachably or exchangeably to a tool carrier,
b) each groove generating region (42, 44) has a groove cutting edge (42A, 44A) oriented toward or situated on the face side,
c) the groove cutting edges (42A, 44A) are the radially furthest outward projecting regions of the tool (3), at least in the front portion (8) thereof,
d) the groove cutting edges (42A, 44A) are of at least approximately circular form,
e) the radius (r0) of the groove cutting edges (42A) is greater by a differential radius (Δr) than the radius (r1) of the first thread generating sub-region (321),
f) the or each groove cutting edge (42A, 44A) is adjoined laterally in a circumferential direction by a side cutting edge (42D or 44D), which is at the front in the direction of rotation (S) about the tool axis (A), and preferably by a side region (42E or 44E) which is at the rear in the direction of rotation (S) about the tool axis (A),
g) during the rotation of the tool (4) in the direction of rotation (S) which takes place for the generation of the thread, the front side cutting edge (42D and 44D) cuts laterally into the workpiece, wherein there adjoins preferably in a radially inward direction a lateral rake surface (42F or 44F),
h) the rear side region (42E and 44E) is, by contrast, at an obtuse angle, that is to say does not have cutting action and is preferably of convex form,
i) axially behind the groove cutting edge (42A and 44A) there adjoins a free surface (42B and 44B) which preferably slopes downward, in particular in a linear or conical fashion, from the radius (r0) to a radius smaller than the radius (r1) of the first pressing lobe (32-1) or of the first thread generating sub-region,
j) the groove cutting edge (42A, 44A) is adjoined in a radially inward direction by a face-side rake surface (42C, 44C) which runs axially rearward in a linear or concavely curved fashion and on which chips produced during the generation or reaming of the groove with the groove cutting edge (42A or 44A) are discharged,
k) the face-side rake surface (42C, 44C) runs from a lowest point axially forward again to a planar central region (51) oriented perpendicular to the tool axis A, which central region surrounds a central opening of a central duct (50) of the tool 4, via which central duct coolant and/or lubricant can be supplied.

9. Tool, in particular the tool according to Claim 5, having at least one or any desired combination of the following features:
a) the tool is rotatable about a tool axis (A) and has a number m ≥ 1 of thread generating regions (32, 34) for generating a thread (36) in a workpiece,
b) the threading tool (3) comprises a shank (5) which has a rear portion (9), which is for example of cylindrical form, and a front portion (8) which is narrowed in diameter adjacent to the rear portion (9) and centrally through which the tool axis (A) extends,
c) at the end of the rear portion (9) there is formed a clamping region for the clamping of the shank (5),
d) the front portion (8) has, toward the face side (6) which faces away from the rear portion (9) or which is arranged at the front, the m thread generating regions (32, 34),
e) the m thread generating regions (32, 34) are in the form of axial rows, running in each case parallel to the tool axis (A), of thread generating ridges which, in the case of m = 2, are arranged preferably diametrically with respect to one another on opposite sides of the tool axis (A),
f) the thread generating ridges run along the thread pitch of the desired thread and have in each case one pressing lobe, which projects radially furthest outward in relation to the tool axis (A), for the plastic impression of the thread flight into the workpiece,
g) the outer radii of different thread generating ridges or pressing lobes of the two thread generating regions (32, 34) are equal to one another over the entire axial length,
h) the thread generating regions (32, 34) are separated by interposed outer surfaces (33, 35) which have a smaller outer radius than the thread generating regions (32, 34), that is to say are recessed radially with respect to said thread generating regions, and/or form free spaces between the thread generating regions,
i) the thread generating regions (32, 34) cover in each case a first angle range (δ) and the outer surfaces (33, 35) cover in each case a second angle range (ε), wherein preferably the first angle range (δ) lies in an interval from one to 2.5 times the second angle range (ε) and/or wherein the pressing lobes are situated preferably centrally in the respective angle ranges,
j) the outer surfaces (33, 35) initially form concavely inwardly running portions directly adjoining one of the thread generating regions (32, 34) and then bulge convexly outward into bulges (52, 54), or have only a convex outwardly directed bulge (52, 54).

10. Tool according to one of the preceding claims, having at least one or any desired combination of the following features:
a) the outer profile of only one thread cutting tooth or thread shaping wedge already defines the final thread profile of the thread flight portion generated by said tooth or wedge,
b) the thread generating regions are divided into axially offset thread generating sub-regions (72 and 82 or 74 and 84) with different thread outer profiles, wherein in particular any desired thread outer profiles may be combined in any desired sequence,
c) a first thread generating sub-region, preferably a front thread generating sub-region (72, 74), which is situated in front of a rear thread generating sub-region (82, 84) axially or in a direction toward the face side, has a thread outer profile with at least partially smaller dimensions or outer dimensions, in particular at the profile tip but if appropriate also at the profile flanks, than a second thread generating sub-region, preferably the rear thread generating sub-region (82, 84),
d) each first thread generating sub-region, in particular front thread generating sub-region (72, 74) has, in its thread outer profile, a flattening (32F, 34F) at the profile tip,
e) each second, in particular rear, thread generating sub-region (82, 84) has an outer profile which has a radially further outwardly projecting profile tip (32G) than the first thread generating sub-region, in particular front thread generating sub-region (72, 74),
f) the diameter (E) of a thread generating sub-region, in particular of the first thread generating sub-region or of the front thread generating sub-region (72, 74), is smaller than the diameter (F) of another thread generating sub-region, in particular of the second thread generating sub-region or of the rear thread generating sub-region (82, 84).

11. Method for producing a thread in a workpiece, having the following method steps:
- generating a number n of grooves in a wall, which encircles a thread axis, of the workpiece by means of n groove generating regions of a tool and by means of a movement of the tool substantially axial with respect to the thread axis, wherein each groove generating region of the tool generates an associated groove;
- introducing thread generating regions, which are situated behind the groove generating regions, of the tool into the generated associated grooves in the wall of the workpiece in a direction along the associated groove, wherein the thread generating region projects, in a direction radial with respect to the thread axis, into the associated groove so as to maintain a radial spacing from the groove base;
- generating the thread in each wall sub-region, adjoining the groove(s), of the wall of the workpiece by rotating the tool about the thread axis by a predefined angle of rotation and with a simultaneous axial feed motion of the thread generating tool coaxially with respect to the thread axis with an axial feed speed adapted to the rotational speed of the rotational movement and to the thread pitch, wherein, during the rotation and the simultaneous axial feed movement, each thread generating region engages into the associated wall sub-region and generates an associated part of a thread flight, and after the rotation projects into the same groove again or into another groove in the wall;
- moving the thread generating regions of the thread generating tool out of the associated grooves in a direction along the grooves.

12. Method according to Claim 11, in which, during the introduction of the thread generating regions of the tool into the generated associated grooves, each thread generating region projects, in a direction radial with respect to the thread axis, into the associated groove so as to maintain a radial spacing from the groove base.

13. Method according to Claim 11 or Claim 12, in which, during the generation of the thread, the tool is rotated about the thread axis by a predefined angle of rotation.

14. Method according to one of Claims 11 to 13, in which a tool according to one of Claims 1 to 10 is used.

## Revendications

1. Outil de formage de filet pour produire un filet dans une pièce, présentant les caractéristiques suivantes:
a) l'outil peut tourner autour d'un axe d'outil (A),
b) l'outil présente un nombre n ≥ 1 de régions de formage de rainure (42, 44) pour produire chacune une rainure (22, 24) s'étendant essentiellement parallèlement à un axe de filet du filet dans la pièce (2) et un nombre m ≥ 1 de régions de formage de filet (32, 34) pour le formage du filet (36) dans la pièce,
c) chacune des m régions de formage de filet est dans une projection axiale parallèle à l'axe d'outil (A) disposée derrière une des n régions de formage de rainure et présente en section transversale dans la projection axiale une plus petite extension que cette région de formage de rainure,
d) de ce fait chaque région de formage de filet peut être introduite en direction axiale à travers la rainure produite dans la pièce par la région de formage de rainure située en avant de celle-ci dans la projection.

2. Outil selon la revendication 1, dans lequel au moins une partie des n régions de formage de rainure sont réalisées en forme de régions de formage de rainure par enlèvement de copeaux avec des taillants de formage de rainure, dans lequel les taillants de formage de rainure sont réalisés en particulier en forme de taillants spatiaux et/ou sont disposés sur un côté frontal de l'outil, dans lequel en particulier au moins une partie des régions de formage de rainure par enlèvement de copeaux et/ou de tranchants de formage de rainure présentent en direction axiale et/ou en direction périphérique respectivement au moins un degré ou un côté, qui est prévu en particulier comme degré ou côté de répartition des copeaux.

3. Outil selon la revendication 1 ou la revendication 2 avec au moins une ou une combinaison quelconque des caractéristiques suivantes:
a) au moins une partie des n régions de formage de rainure sont réalisées en forme de régions de formage de rainure opérant sans copeaux et/ou opérant par déformation ou enfoncement plastique du matériau de la pièce,
b) chaque région de formage de rainure (42, 44) présente une bavure (42G, 44G) s'étendant essentiellement dans la direction périphérique autour de l'axe d'outil (A), qui vue en direction axiale est radialement la plus haute élévation de la région de formage de rainure (42, 44) et/ou s'étend radialement le plus loin vers l'extérieur,
c) avant la bavure (42G, 44G) en direction axiale, chaque région de formage de rainure (42, 44) présente une face avant (42F, 44F),
d) la face avant (42F, 44F) monte en direction axiale jusqu'à la bavure (42G, 44G) à partir d'un profil avant (42G', 44G') situé radialement plus à l'intérieur que la bavure (42G, 44G), qui est disposé en particulier sur le côté frontal (6) de l'outil (4),
e) la face avant (42F, 44F) forme une face d'abordage, avec laquelle la région de formage de rainure (42, 44) s'enfonce d'abord dans la surface de la pièce et avec une force de déformation lentement croissante,
f) derrière la bavure (42G, 44G) en direction axiale chaque région de formage de rainure (42, 44) présente une face arrière (42H, 44H), qui descend à partir de la bavure (42G, 44G) en direction axiale,
g) la bavure (42G, 44G) présente un maximum (421, 441) s'étendant radialement le plus loin vers l'extérieur et descend radialement du maximum (421, 441) dans une direction périphérique en un flanc (42J, 44J) jusqu'à un premier point d'extrémité (42L, 44L), qui est situé radialement plus à l'intérieur que le maximum (421, 441) et dans l'autre direction périphérique en un autre flanc (42K, 44K) jusqu'à un deuxième point d'extrémité (42M, 44M) qui est situé radialement plus à l'intérieur que le maximum (42I, 44I),
h) un point d'extrémité (42M, 44M) est situé radialement plus à l'intérieur que l'autre point d'extrémité (42L, 44L) et/ou un flanc (42J, 44J) est plus court que l'autre flanc (42K, 44K),
i) le profil avant (42G', 44G') a une forme analogue à la bavure (42G, 44G) avec un maximum (421', 441') et deux flancs (42J', 44J', 42K', 44K') descendant du maximum jusqu'aux points d'extrémité (42L', 44L', 42M', 44M'),
j) la face avant (42F, 44F) relie des maxima correspondants (421 et 42I', 44I et 441') de la bavure (42G, 44G) et du profil avant (42G', 44G') et/ou des points d'extrémité correspondants (42L et 42L', 44L et 44L') et/ou des flancs correspondants (42J et 42J', 44J et 44J', 42K et 42K', 44K et 44K'),
k) la face avant (42F, 44F) s'étend entre le profil avant et la bavure en direction axiale de façon essentiellement linéaire ou avec une courbure convexe vers l'intérieur ou en suivant une fonction radiale continue quelconque.

4. Outil selon l'une quelconque des revendications précédentes avec au moins une ou une combinaison quelconque des caractéristiques suivantes:
a) les n régions de formage de rainure sont disposées autour de l'axe d'outil avec une équidistance angulaire de 360°/n de l'une à l'autre,
b) la part angulaire ▪ d'une ou de chacune des régions de formage de rainure et des régions de formage de filet situées derrière celles-ci autour de l'axe d'outil (A) vaut entre 7,2° et 45°, en particulier entre 13° et 40° et de préférence encore entre 27° et 36°.
c) les régions de formage de filet (32 et 34) s'étendent radialement plus loin vers l'extérieur que les autres faces extérieures (33, 35) de l'outil de formage de filet (3).

5. Outil selon l'une quelconque des revendications précédentes avec au moins une ou une combinaison quelconque des caractéristiques suivantes:
a) au moins une région de formage de filet est une région de formage de filet et produit sa partie du pas de filet par formage et dès lors sans copeaux,
b) au moins une partie des régions de formage de filet (32 et 34) de l'outil de formage de filet (3) présentent sur une ligne hélicoïdale correspondant au filet à produire en ce qui concerne le pas du filet et le sens d'enroulement des gorges d'enfoncement de filet disposées autour de l'axe d'outil (A), qui s'étendent à l'intérieur de la région de formage de filet radialement le plus loin vers l'extérieur, mais radialement moins loin vers l'extérieur que la ou les région(s) de formage de rainure.

6. Outil selon l'une quelconque des revendications précédentes avec au moins une ou une combinaison quelconque des caractéristiques suivantes:
a) au moins une région de formage de filet est une région de taille de filet et produit sa partie du pas de filet avec enlèvement de copeaux,
b) au moins une partie des régions de formage de filet (32 et 34) de l'outil de formage de filet (3) présentent sur une ligne hélicoïdale correspondant au filet à produire en ce qui concerne le pas du filet et le sens d'enroulement des dents de taille de filet (32A ou 34A) disposées autour de l'axe d'outil (A), qui s'étendent à l'intérieur de la région de formage de filet radialement le plus loin vers l'extérieur, mais radialement moins loin vers l'extérieur que la ou les région(s) de formage de rainure, dans lequel de préférence des faces libres (32B, 34B) extérieures se raccordent aux dents de taille de filet (32A, 34A) en direction opposée à la direction de coupe ou à la direction de rotation.

7. Outil selon la revendication 6,
dans lequel les dents de taille de filet (32A ou 34A) sont disposées et configurées de façon à tailler dans le sens d'enroulement du filet à produire et de la ligne hélicoïdale autour de l'axe d'outil (A), sur lequel les dents de taille de filet (32A ou 34A) sont disposées,
ou
dans lequel les dents de taille de filet (32A ou 34A) sont disposées et configurées de façon à tailler dans le sens opposé au sens d'enroulement du filet à produire et de la ligne hélicoïdale autour de l'axe d'outil (A), sur lequel les dents de taille de filet (32A ou 34A) sont disposées.

8. Outil selon l'une quelconque des revendications précédentes avec au moins une ou une combinaison quelconque des caractéristiques suivantes:
a) les régions de formage de rainure et/ou les régions de formage de filet sont fixées de façon amovible ou échangeable à un porte-outil,
b) chaque région de formage de rainure (42, 44) présente un tranchant de rainure (42A, 44A) orienté vers le côté frontal ou se trouvant sur celui-ci,
c) les tranchants de rainure (42A, 44A) sont les régions de l'outil (3) s'étendant radialement le plus loin vers l'extérieur, au moins dans sa partie avant (8),
d) les tranchants de rainure (42A, 44A) sont de forme au moins approximativement ronde,
e) le rayon (r0) des tranchants de rainure (42A) est plus grand d'une différence de rayons (-r) que le rayon (r1) de la première région de formage de filet (321),
f) au ou à chaque tranchant de rainure (42A, 44A) se raccorde latéralement en direction périphérique un tranchant latéral avant (42D ou 44D) dans le sens de rotation (S) autour de l'axe d'outil (A) et de préférence une région latérale arrière (42E ou 44E) dans le sens de rotation (S) autour de l'axe d'outil (A),
g) le tranchant latéral avant (42D ou 44D) taille latéralement dans la pièce lors de la rotation de l'outil (4) dans le sens de rotation (S) pour le formage du filet, dans lequel une face de coupe latérale (42F ou 44F) se raccorde de préférence radialement vers l'intérieur,
h) la région latérale arrière (42E ou 44E) est au contraire émoussée, donc n'est pas coupante et est de préférence conçue de forme convexe,
i) axialement derrière le tranchant de rainure (42A ou 44A) se raccorde une face libre (42B ou 44B), qui baisse de préférence du rayon (r0) à un rayon, qui est plus petit que le rayon (r1) de la première gorge d'enfoncement (32-1) ou de la première région partielle de formage de filet, en particulier de façon linéaire ou conique,
j) radialement vers l'intérieur se raccorde au tranchant de rainure (42A, 44A) une face de coupe côté frontal (42C, 44C), qui s'étend linéairement ou avec une courbure concave axialement vers l'arrière et sur laquelle s'échappent les copeaux produits lors du formage ou de l'évacuation de la rainure avec le tranchant de rainure (42A ou 44A),
k) la face de coupe côté frontal (42C, 44C) s'étend d'un point le plus profond de nouveau axialement vers l'avant jusqu'à une région centrale plane (51), orientée perpendiculairement à l'axe d'outil (A), qui entoure une ouverture centrale d'un canal central (50) de l'outil (4), par lequel un moyen de refroidissement et/ou de lubrification peut être introduit.

9. Outil, en particulier outil selon la revendication 5, avec au moins une ou une combinaison quelconque des caractéristiques suivantes:
a) l'outil peut tourner autour d'un axe d'outil (A) et présente un nombre m ≥ 1 de régions de formage de filet (32, 34) pour le formage d'un filet (36) dans une pièce,
b) l'outil de filetage (3) comprend une tige (5), qui présente une partie postérieure (9), de forme par exemple cylindrique, et une partie antérieure (8), dont le diamètre diminue à la jonction avec la partie postérieure (9), et au centre de laquelle passe l'axe d'outil (A),
c) à l'extrémité de la partie postérieure (9) est formée une région de serrage pour le serrage de la tige (5),
d) la partie antérieure (8) présente en direction du côté frontal (6) détourné de la partie postérieure (9) ou disposé à l'avant les m régions de formage de filet (32, 34),
e) les m régions de formage de filet (32, 34) sont réalisées en forme de rangées axiales de nervures de formage de filet s'étendant chacune parallèlement à l'axe d'outil (A), qui dans le cas où m = 2 sont de préférence diamétralement opposées l'une à l'autre sur des côtés opposés de l'axe d'outil (A),
f) les nervures de formage de filet s'étendent le long du pas de filet du filet désiré et présentent chacune une gorge d'enfoncement s'étendant le plus loin vers l'extérieur radialement par rapport à l'axe d'outil (A) pour l'enfoncement plastique du pas de filet dans la pièce,
g) les rayons extérieurs de différentes nervures de formage de filet ou gorges d'enfoncement des deux régions de formage de filet (32, 34) sont égaux l'un à l'autre sur toute la longueur axiale,
h) les régions de formage de filet (32, 34) sont séparées par des faces extérieures (33, 35) situées entre elles, qui ont un rayon extérieur plus petit que les régions de formage de filet (32, 34), donc qui sont radialement en retrait par rapport à celles-ci, et/ou forment des espaces libres entre les régions de formage de filet,
i) les régions de formage de filet (32, 34) recouvrent chacune une première région angulaire (▪) et les faces extérieures (33, 35) recouvrent chacune une deuxième région angulaire (▪), dans lequel la première région angulaire (▪) se situe de préférence dans un intervalle d'une fois à 2,5 fois la deuxième région angulaire (▪) et/ou dans lequel les gorges d'enfoncement sont situées de préférence au milieu dans les régions angulaires respectives,
j) les faces extérieures (33, 35) forment d'abord, immédiatement à la suite d'une des régions de formage de filet (32, 34), des parties à courbure concave vers l'intérieur et prennent ensuite une courbure convexe vers l'extérieur dans des renflements (52, 54) ou ne présentent qu'un renflement convexe orienté vers l'extérieur (52, 54).

10. Outil selon l'une quelconque des revendications précédentes avec au moins une ou une combinaison quelconque des caractéristiques suivantes:
a) le profil extérieur uniquement d'une dent de taille de filet ou d'un coin de formage de filet détermine déjà le profil de filet définitif de la partie de pas de filet produite par cette dent ou ce coin,
b) les régions de formage de filet sont divisées en régions de formage de filet axialement décalées (72 et 82 ou 74 et 84) avec des profils extérieurs de filet différents, dans lequel en particulier des profils extérieurs de filet quelconques peuvent être combinés en une suite quelconque,
c) une première région partielle de formage de filet, de préférence une région partielle de formage de filet avant (72, 74), qui est située axialement ou en direction du côté frontal avant une région partielle de formage de filet arrière (82, 84), présente un profil extérieur de filet avec des dimensions ou des dimensions extérieures au moins partiellement plus petites, en particulier à la tête du profil, mais éventuellement aussi sur les flancs du profil, qu'une deuxième région partielle de formage de filet, de préférence la région partielle de formage de filet arrière (82, 84),
d) chaque première région partielle de formage de filet, en particulier chaque région partielle de formage de filet avant (72, 74) présente dans son profil extérieur de filet un méplat (32F, 34F) dans la tête du profil,
e) chaque deuxième région partielle de formage de filet, en particulier arrière (82, 84), a un profil extérieur, qui présente une tête de profil (32G) s'étendant radialement vers l'extérieur plus loin que la première région partielle de formage de filet, en particulier la région partielle de formage de filet avant (72, 74),
f) le diamètre (E) d'une région partielle de formage de filet, en particulier de la première région partielle de formage de filet ou de la région partielle de formage de filet avant (72, 74), est plus petit que le diamètre (F) d'une autre région partielle de formage de filet, en particulier de la deuxième région partielle de formage de filet ou de la région partielle de formage de filet arrière (82, 84).

11. Procédé de formage d'un filet sur une pièce, avec les étapes de procédé suivantes:
- produire un nombre n de rainures avec n régions de formage de rainure d'un outil dans une paroi de la pièce entourant un axe de filet par un mouvement de l'outil essentiellement axial par rapport à l'axe de filet, dans lequel chaque région de formage de rainure de l'outil produit une rainure correspondante;
- introduire des régions de formage de filet de l'outil situées derrière les régions de formage de rainure dans les rainures correspondantes produites dans la paroi de la pièce dans la direction orientée le long de la rainure correspondante, dans lequel la région de formage de filet pénètre dans la direction radiale par rapport à l'axe de filet dans la rainure correspondante en respectant une distance radiale par rapport au fond de rainure;
- produire le filet dans chaque région partielle de paroi de la pièce adjacente à la/aux rainure(s) par rotation de l'outil autour de l'axe de filet d'un angle de rotation prédéterminé et avance axiale simultanée de l'outil de formage de filet de façon coaxiale à l'axe de filet avec une vitesse d'avance axiale adaptée à la vitesse de rotation du mouvement de rotation et au pas du filet, dans lequel pendant la rotation et l'avance axiale simultanée chaque région de formage de filet s'engage dans la région partielle de paroi correspondante et produit une partie correspondante d'un pas de filet et après la rotation pénètre de nouveau dans la même rainure ou dans une autre rainure dans la paroi;
- retirer les régions de formage de filet de l'outil de formage de filet hors des rainures correspondantes dans une direction orientée le long des rainures.

12. Procédé selon la revendication 11, dans lequel lors de l'introduction des régions de formage de filet de l'outil dans les rainures correspondantes produites chaque région de formage de filet pénètre dans la direction radiale par rapport à l'axe de filet dans la rainure correspondante en respectant une distance radiale par rapport au fond de rainure.

13. Procédé selon la revendication 11 ou la revendication 12, dans lequel lors du formage du filet on fait tourner l'outil d'un angle de rotation prédéterminé autour de l'axe de filet.

14. Procédé selon l'une quelconque des revendications 11 à 13, dans lequel on utilise un outil selon l'une quelconque des revendications 1 à 10.
